(19) Europäisches Patentamt
European Patent Office
Office européen des brevets

(11) Publication number: **0 166 566 B1**

(12) **EUROPEAN PATENT SPECIFICATION**

(45) Date of publication of patent specification: **07.10.92**

(51) Int. Cl.[5]: **C09B 29/033**, C08K 5/23, C09B 69/10

(21) Application number: **85304352.9**

(22) Date of filing: **18.06.85**

(54) **Resin colorants and resin coloration.**

(30) Priority: **25.06.84 US 624379**
**25.06.84 US 624377**

(43) Date of publication of application:
**02.01.86 Bulletin 86/01**

(45) Publication of the grant of the patent:
**07.10.92 Bulletin 92/41**

(84) Designated Contracting States:
**AT BE CH DE FR GB IT LI LU NL SE**

(56) References cited:
**EP-A- 0 072 621**
**US-A- 4 284 729**

(73) Proprietor: **MILLIKEN RESEARCH CORPORATION**
**Iron Ore Road**
**Spartanburg South Carolina 29304(US)**

(72) Inventor: **Kluger, Edward William**
**Route 1**
**Pauline South Carolina 29302(US)**
Inventor: **Moore, Patrick David**
**291 Ferndale Drive Route 10**
**Spartanburg South Carolina 29303(US)**

(74) Representative: **Perry, Robert Edward et al**
**GILL JENNINGS & EVERY 53-64 Chancery Lane**
**London WC2A 1HN(GB)**

EP 0 166 566 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to novel reactive colorants based on thiophenes, and to more general colorants' application in coloration of thermoset resins, exemplified by polyurethanes.

It is known that polyurethane resins, produced by the reaction of polyol and an isocyanate, may be colored by adding a pigment or dyestuff to the resin. When, however, certain thermoset materials such as polyurethanes are colored with a pigment, the resulting product may be only slightly tinted at normal pigment concentrations, and may thus require larger, undesirable amounts of pigment if a dark hue is to be attained. This phenomenon is particularly apparent in the case of polyurethane foams. On the other hand, if a conventional dyestuff is employed to color the thermoset product, water resistance, oil resistance, and/or resistance to migration of the dyestuff may often be disadvantageously inadequate. When such a dye is used as a coloring agent, it is difficult to prevent bleeding of the dye from the colored resin product. Thermosetting resin products, such as polyurethanes, however, which have been colored with a dyestuff, have certain advantages. Particularly, such colored products may, for instance, possess a clearer hue, and improved transparency characteristics, both of which are important commercial attributes.

Dyes rather than pigments are preferred for use in coloring polyurethane resins because each molecule of a dye imparts color to the product. Conversely, only the surface molecules of pigment particles impart color. From the standpoint of utilization, then, dyes are more effective than pigments. Due to the above noted shortcomings of dyes, however, pigments have historically been used extensively.

An improvement in previous techniques is described in GB-A-2074177, in which a liquid polymeric colorant is added to the reaction mixture during production of a thermoset resin. It was determined that a liquid, reactive, polymeric colorant could be added before or during the polyaddition reaction to achieve desired coloration of the thermoset resin. The specific polymeric colorant of GB-A-2074177 has the formula:

$R\ (\text{polymeric constituent-}X)_n$

wherein R is an organic dyestuff radical; the polymeric constituent is selected from polyalkylene oxides and copolymers of polyalkylene oxides in which the alkylene moiety of the polymeric constituent contains 2 or more carbon atoms and such polymeric constituent has a molecular weight of from 44 to 1500; X is selected from -OH, $-NH_2$ and -SH, and n is an integer of from 1 to 6. The liquid coloring agent is added to the reaction mixture in an amount sufficient to provide the intended degree of coloration of the thermoset resin.

Despite this improvement, certain problems remain with regard to coloration of polyurethane resins, and foams, in particular. During the complex reactions experienced in producing thermosetting resins, such as polyurethane foams, interactions may occur between certain substituents of the colorant and reactive components of the reaction mixture. In polyurethane foam production specifically, a careful balance must be maintained throughout the reaction to achieve the desired end product. If the proper balance is not maintained, a product may be produced that is outside the desired product specifications and/or the final product may exhibit poor stability under certain conditions.

Other approaches to coloration of polyurethanes specifically are set forth in US-A-3994835 and US-A-4132840; the former discloses the addition of dispersions of dyestuffs containing at least one free amino or hydroxyl group capable of reacting with the isocyanate under the conditions of polyaddition and liquids in which the dyes are soluble to an extent less than 2 percent. US-A-4132840 discloses the coloration of polyurethane resins with p-di(hydroxyalkyl)amino-$\beta,\beta$-dicyanostyrenes.

As noted in "New Uses For Highly Miscible Liquid Polymeric Colorants In The Manufacture of Coloured Urethane Systems", a paper presented by Moore et al at the 27th Annual Technical/Marketing Conference for SPI, advantages are attendant to the use of polymeric colorants in polyurethanes, beyond mere aesthetic coloration. Specifically, polymeric colorants can act as important process control indicators which allow close maintenance of quality control parameters, by visual observations of product colour. The colorants to which the paper refers are of the type disclosed in GB-A-2074177, and while they may be successfully employed in the coloration of thermoset resins generally, certain of the colorants encounter adverse interactions in the production of polyurethane foam, especially when tin catalysts and flame-retardants are present.

Dyestuffs are also disclosed in US-A-2827450, US-A-4301068, US-A-4113721, US-A-282144, US-A-4301069, US-A-4255326, GB-A-1583377, GB-A-1394365 and DE-A-2334169, as are techniques for the coloration of polyurethane resins.

There is a continuing need for a colouring agent which has excellent water-resistance, oil-resistance and/or bleeding-resistance, and which at the same time may be easily incorporated into a polyurethane

reaction mixture, without adverse interaction with components of the mixture. More generally, it would be highly desirable to prepare coloured thermosetting resin using a colouring agent having these advantages, and to combine the very desirable characteristics of high color yields of dyes with the non-migratory properties of pigments which result, overall, in a product which is superior to both in terms of cost-effectiveness and properties of the cured polymer system. The present invention provides a process whereby the above advantages may be achieved.

According to the present invention, a process for coloring polyurethane resins produced by the polyaddition reaction in a reaction mixture of a polyol with an isocyanate, comprises adding to the reaction mixture, before or during the reaction, a reactive coloring agent which is effectively resistant to stannous octanoate and flame retardant compounds and which is of the formula

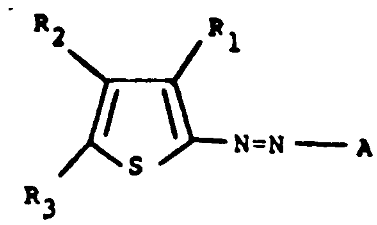

wherein either $R_1$, $R_2$ and $R_3$ are independently selected from halogen, carboxy, alkanoyl, aroyl, alkyl, aryl, cyano, alkylsulfonyl, arylsulfonyl, alkylthio, arylthio, alkylsulfinyl, arylsulfinyl, alkyldithio, aryldithio, thiocyano, alkylaminocarbonyl, dialkylaminocarbonyl, alkoxy, aryloxy, hydrogen, alkylaminosulfonyl, arylaminosulfonyl, dialkylaminosulfonyl, diarylaminosulfonyl, alkylaminosulfinyl, dialkylaminosulfinyl, arylaminosulfinyl, diarylaminosulfinyl, alkylaminothio, dialkylaminothio, arylaminothio and diarylaminothio, or one of $R_1$, $R_2$ and $R_3$ is as defined above and the other two are a divalent polymethylene radical, thus forming a carbocyclic ring with the carbon atoms to which they are bound; and

A is the radical of a dyestuff coupler which has functionality by virtue of one or more reactive substituents.

The functionality may preferably be difunctionality or higher order functionality; and the functional substituents may preferably be polymeric.

Colorants used in the process of the present invention are preferably liquid materials at ambient conditions of temperature and pressure, and if not, are soluble in reactants of the process.

In order to avoid adverse interactions during production of the polyurethane resin, the presence on the thiophene ring of certain substituents such as $NO_2$, NO, $NH_2$, NHR (where R is alkyl or aryl), SH, OH, $CONH_2$ and $SO_2NH_2$, as well as hydrogen (except as specified above), should be avoided.

The reactive substituents for colorants employed in the process of the invention may be any suitable reactive substituent that will accomplish the objects of the present invention. Typical of such reactive substituents which may be attached to the dyestuff radical are the hydroxyalkylenes and polymeric epoxides, such as polyalkylene oxides and copolymers thereof. Polyalkylene oxides and their copolymers which may be employed to provide the colorant of the present are, without limitation, polyethylene oxides, polypropylene oxides, polybutylene oxides, copolymers of polyethylene oxides, polypropylene oxides and polybutylene oxides, and other copolymers including block copolymers, in which a majority of the polymeric substituent is polyethylene oxide, polypropylene oxide and/or polybutylene oxide. Further, such polymeric substituents generally have an average molecular weight of from 44 to 2500, preferably from 88 to 1400.

Suitable organic dyestuff radicals for use in the process of the present invention include

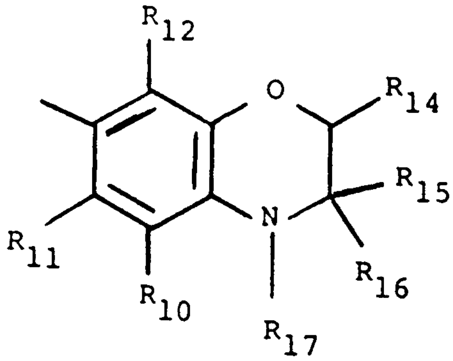

wherein $R_{10}$, $R_{12}$, $R_{13}$ and $R_{14}$ are independently selected from hydrogen or lower alkyl; $R_{11}$ is hydrogen, lower alkyl, alkylaminocarbonyl, arylaminocarbonyl, alkylaminosulfonyl or arylaminosulfonyl; $R_{15}$ and $R_{16}$ are the same or different lower alkyl; and $R_{17}$ is a polyalkylene oxide radical, a radical of a copolymer of polyalkylene oxides, or a hydroxyalkylene radical.

Novel reactive colorants suitable for use in this invention have the formula

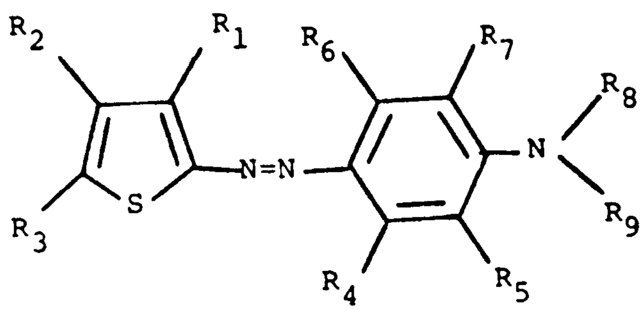

(in which case $R_1$, $R_2$ and $R_3$ are as defined above or alkoxycarbonyl) wherein $R_4$, $R_5$, $R_6$ and $R_7$ are independently selected from hydrogen, alkyl, alkoxy, aryloxy, alkylaminosulfonyl, dialkylaminosulfonyl, arylaminosulfonyl, diarylaminosulfonyl, alkylaminocarbonyl, dialkylaminocarbonyl, arylaminocarbonyl, diarylaminocarbonyl, halogen, alkylthio and arylthio; and

$R_8$ and $R_9$ are independently selected from polyalkylene oxide radicals, radicals of copolymers of polyalkylene oxides, and radicals of hydroxyalkylenes.

Preferably, in the above formula, either $R_1$, $R_2$ and $R_3$ are independently selected from halogen, carboxyl, alkanoyl, aroyl, alkyl, aryl, cyano, alkylthio, alkyldithio, arylthio, aryldithio, thiocyano, alkylaminocarbonyl, dialkylaminocarbonyl, arylaminocarbonyl, diarylaminocarbonyl, alkoxy, alkylaminothio, dialkylaminothio and (when an adjacent group is isobutyryl) hydrogen, or one of $R_1$, $R_2$ and $R_3$ is as defined above and the other two are a divalent polymethylene radical.

Preferably, the $R_1$, $R_2$ and $R_3$ groups in the above formula are independently selected from cyano, lower alkyl, a carbocyclic-forming polymethylene chain, alkoxycarbonyl, alkanoyl, arylcarbonylamino, and hydrogen when an adjacent group is isobutyryl. $R_4$, $R_5$ $R_6$ and $R_7$ are preferably independently selected from hydrogen, halogen and alkyl.

Examples of particularly preferred novel compounds of the present invention are the following

(1)

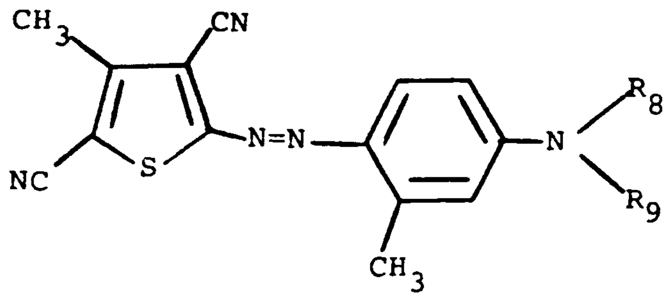

(2)

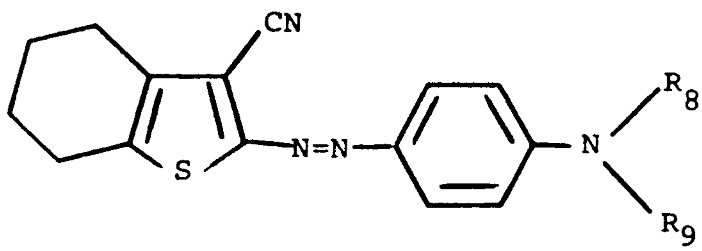

(3)

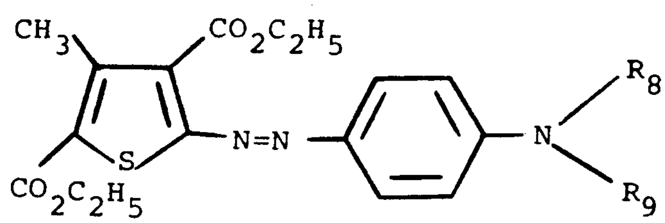

(4)

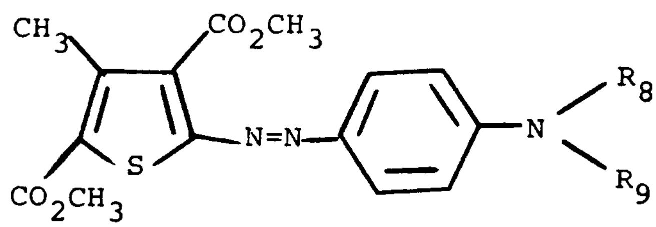

(5)

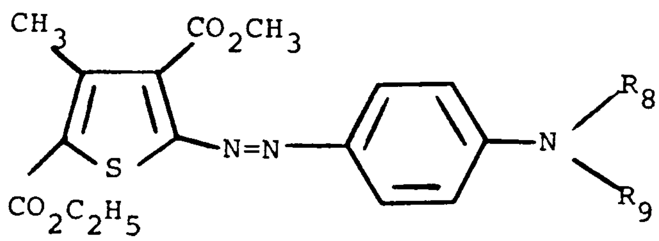

(6)

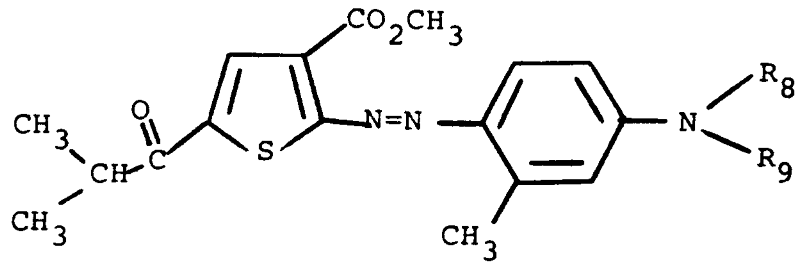

(7)

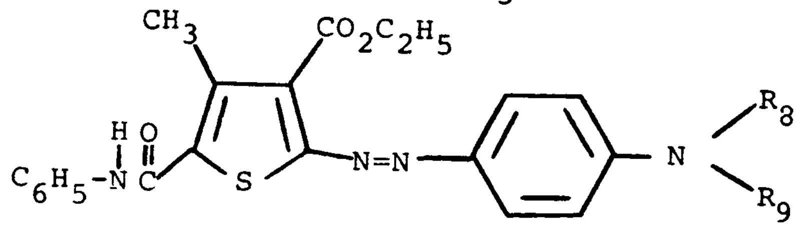

(8)

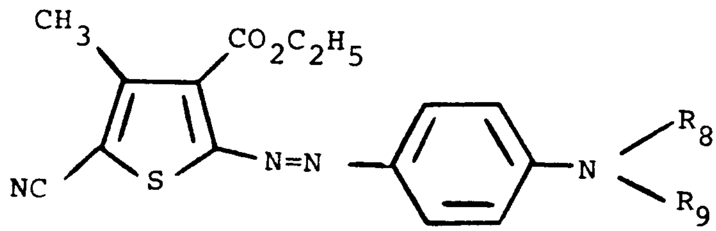

(9)

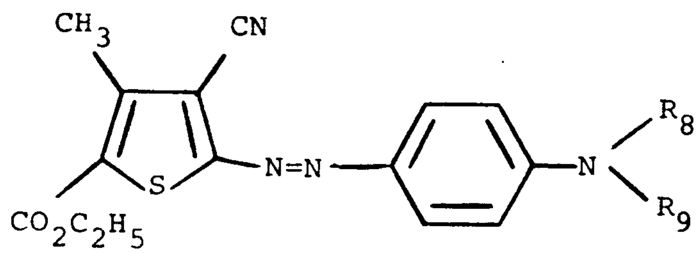

(10)

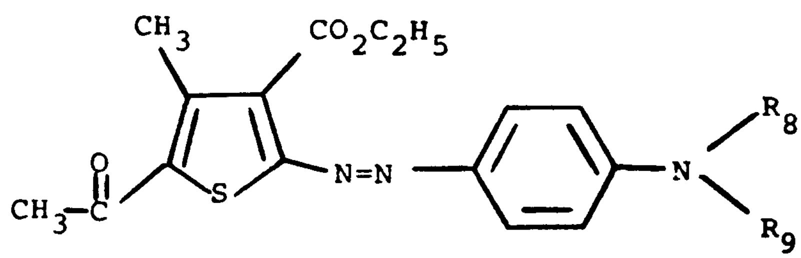

In formulae 1 to 10, $R_8$ and $R_9$ have the values given above, and are preferably each a radical of a copolymer of ethylene and propylene oxides, having a molecular weight of from 88 to 1400.

Any suitable procedure may be employed to produce the reactive colorants of the present invention whereby the reactive substituent, or substituents, are coupled to an organic dyestuff radical. For example, the procedure set forth in US-A-3157633 may be employed. Further, it may be desirable to use an organic solvent as the reaction medium since the reactive substituent is preferably in solution when coupled to the organic dyestuff radical. Any suitable organic solution, even an aqueous organic solution, may be employed. The particular shade of the colorant will depend primarily upon the particular dyestuff radical selected. A large variety of colors and shades may be obtained by blending two or more colorants. Blending of the colorants of the present invention can be readily accomplished especially if the colorants are polymeric materials having substantially identical solubility characteristics, which are dictated by the nature of the polymeric chain. Therefore, according to a preferred embodiment the liquid polymeric colorants are in general soluble in one another, and are also in general completely compatible with each

other.

For example, the colorants for use according to the present invention may be prepared by converting a dyestuff intermediate containing a primary amino group into the corresponding reactive compound, and employing the resulting compound to produce a colored product having a chromophoric group in the molecule. In the case of azo dyestuffs, this may be accomplished by reacting a primary aromatic amine with an appropriate amount of an alkylene oxide or mixtures of alkylene oxides, such as ethylene oxide, propylene oxide, or even butylene oxide, according to procedures well known in the art.

Once the reactive coupler is produced along the lines described above, it can be reacted with the thiophene derivative as set forth in the Examples hereinafter. As can be seen from the Examples, the colorant form includes liquids, oils, and powders, all of which may be successfully employed in the process of the present invention.

According to the process of the invention, the reactive colorant may be incorporated into the resin by simply adding it to the reaction mixture or to one of the components of the reaction mixture before or during the polyaddition reaction. For instance, for coloration of polyurethane resin, the colorant may be added to the polyol or even in some instances to the polyisocyanate component of the reaction mixture either before or during polyurethane formation. The subsequent reaction may be carried out in the usual manner, i.e, in the same way as for polyurethane resins which are not colored.

The process of the present invention is quite advantageous for the production of polyurethane foams, in which several reactions generally take place. First an isocyanate such as toluenediisocyanate is reacted with a polyol such as polypropylene glycol in the presence of heat and suitable catalyst. If both the isocyanate and the polyol are difunctional, a linear polyurethane results, whereas should either have functionalities greater than two, a cross-linked polymer will result. If the hydroxylic compound available to react with the -NCO group is water, the initial reaction product is a carbamic acid which is unstable and breaks down into a primary amine and carbon dioxide.

Since excess isocyanate is typically present, the reaction of the isocyanate with the amine generated by decarboxylation of the carbamic acid occurs, and if controlled, the liberated carbon dioxide becomes the blowing agent for production of the foam. Further, the primary amine produced reacts with further isocyanate to yield a substituted urea affords strength and increased firmness characteristics to the polymer.

In general, amine and tin catalysts are used to delicately balance the reaction of isocyanate with water, the blowing reaction, and the reaction of isocyanate with polymer building substituents. If the carbon dioxide is released too early, the polymer has no strength and the foam collapses. If polymer formation advances too rapidly, a closed cell foam results which will collapse on cooling. If the colorant or another component reacts to upset the catalyst balance, poorly formed foam will result.

Additionally, the substituted urea reacts with excess isocyanate, and the urethane itself reacts with further isocyanate to cross link the polymer by both biruet and allophonate formation. Foams colored by the present process may be soft, semi-rigid or rigid foams, including the so-called polyurethane integral skin and microcellular foams.

Coloring agents suitable for use in the process of the present invention are reactive coloring agents, and may be added to the reaction mixture, or to one of the components thereof. When in liquid form, colorants of the present invention may be added as one or more of the components of the reaction mixture. Conversely when in oil or powder forms, the colorants are first added to one of the reactive components and are carried thereby, or conversely are dissolved in a solvent carrier and added as a separate component. Obviously, liquids have significant processing advantages over solids and may, if desired, be added directly to the reaction mixture wherefore no extraneous nonreactive solvent or dispersing agent is present. The present process may, therefore, provide unusual and advantageous properties in the final thermoset resin product.

Polyurethane products which may be colored according to the process of the present invention are useful for producing shaped products by injection molding, extrusion or calendering and may be obtained by adding the coloring agent to the polyol or diol component of the reaction mixture, or to one of the other components, although addition to the polyol component is preferred. The polyols may be polyesters which contain hydroxyl groups, in particular reaction products of dihydric alcohols and dibasic carboxylic acids, or polyethers which contain hydroxyl groups, in particular products of the addition of ethylene oxide, propylene oxide, styrene oxide or epichlorohydrin to water, alcohols or amines, preferably dialcohols. The coloring agent may also be admixed with the so-called chain extending diols, e.g., ethylene glycol, diethylene glycol and butane diol. In general, it is desirable not to use more than 20 percent by weight of coloring agent, based on the weight of polyol. In most cases very strong colorations are produced with a small proportion of the coloring agent. For example, from 0.1 to 5 percent, preferably 0.5 to 2 percent by weight liquid

coloring agent may be utilized, based on the weight of polyol.

The preferred reactive colorants used in the process of the invention may be soluble, for instance, in most polyols which would be used in polyurethanes, and in themselves. This property may be particularly valuable for three reasons. First, this solubility may permit rapid mixing and homogeneous distribution throughout the resin, thus eliminating shading differences and streaks when properly mixed. Second, the colorant may have no tendency to settle as would be the case with pigment dispersions. Third, it is possible to prepare a blend of two or more colors which provides a wide range of color availability.

The reactive coloring agents used in the present process may also be of considerable value in reaction injection molding (RIM) applications. The RIM process is a method of producing molded urethanes and other polymers wherein the two reactive streams are mixed while being poured into a mold. Upon reaction, the polymer is "blown" by chemicals to produce a foamed structure. This process may be hindered by the presence of solid particles, such as pigments. The present invention may not cause this hindrance because there are no particles in the system and the colorant becomes part of the polymer through reaction with one of the components.

The following Examples illustrate the invention, and parts and percentages, unless otherwise noted, are by weight.

Example 1

92.5 grams of phosphoric acid (85% strength) was added along with 12.5 grams of sulfuric acid (98% strength) and 2 drops of 2-ethylhexanol defoamer to a 500 ml closed flask. The mixture was then cooled and 8.2 grams of 2-amino-3,5-dicyano-4-methylthiophene were added followed by further cooling to below 0°C. 18 grams of nitrosyl sulfuric acid (40%)were slowly added while maintaining temperature below 0°C. After three hours, the mixture was tested for nitrite. A positive nitrite test was obtained and one gram of sulfamic acid was added and a vacuum was pulled. After one hour, a negative nitrite test was obtained. 10.8 grams of coupler (M-toluidine - 2EO), 300 grams of ice and water, and 2 grams of urea were added to a 4 liter beaker and cooled to below 0°C. The diazo solution from the flask was added dropwise to the beaker over 40 minutes, maintaining temperature below 0°C. The resulting mixture was stirred for several hours and allowed to stand overnight, after which 122 grams of sodium hydroxide (50%) were added to neutralize excess acid to a pH of about 7. The resulting product was filtered, washed several times with hot water. It was then dissolved in isopropyl alcohol, and precipitated again by adding water, filtered and dried to give a violet powder that melted at 208°C.

Example 2

The procedure of Example 1 was followed with the exception of amounts of reactants and the particular thiophene and coupler employed, all of which are specified below.

| | |
|---|---|
| 49 ml. | acetic acid |
| 19.5 ml. | propionic acid |
| 2.5 grams | $H_2SO_4$ |
| 1 drop | 2-ethylhexanol defoamer |
| 5.7 grams | 2-amino-3-carbomethoxy-5-isobutyryl thiophene |
| 9 grams | nitrosyl sulfuric acid |
| .5 grams | Sulfamic acid |
| 4.5 grams | 2-methoxy-5-acetamido-aniline 2EO |
| 100 grams | ice |
| 2 grams | urea |
| 50 grams | ammonium acetate |
| 300 grams | water and ice |

The precipitated product (after neutralizing with sodium hydroxide) was collected and water-washed several times. The product was oven-dried at 75°C to give a bluish violet solid.

Example 3

The procedure of Example 1 was followed except for amounts of reactants and the particular thiophene

and coupler. Such are set forth below as follows:

| | |
|---|---|
| 200 grams | $H_3PO_4$ |
| 25 grams | $H_2SO_4$ |
| 2 drops | 2-ethylhexanol defoamer |
| 16.3 grams | 2-amino-3,5-dicyano-4-methyl thiophene |
| 35 grams | nitrosyl sulfuric acid |
| 3 grams | sulfamic acid |
| 121 grams | m-toluidine-2EO/15PO/2EO |
| 60.5 grams | ice |
| 4 grams | urea |

The excess acid was neutralized with 272 grams of 50% sodium hydroxide, the bottom salt layer of the reaction mixture was removed hot and the product was dissolved in methylene chloride, washed four times and then dried over magnesium sulfate. The methylene chloride solution was then filtered and stripped to yield a violet oil.

Example 4

The procedure of Example 3 was followed with the exception of amount of reactants and the particular thiophene and coupler employed, all of which are specified below:

| | |
|---|---|
| 183 Grams | $H_3PO_4$ |
| 25 grams | $H_2SO_4$ |
| 2 drops | 2-ethylhexanol defoamer |
| 25.7 grams | 2-amino-3,5-dicarboethoxy -4-methyl thiophene |
| 35 grams | nitrosyl sulfuric acid |
| 1 gram | sulfamic acid |
| 121 grams | m-toluidine 2EO/15PO/2EO |
| 247 grams | ice |
| 2 grams | urea |
| A red oil resulted. | |

Example 5

The procedure of Example 3 was followed with the exception of amount of reactants and the particular thiophene and coupler employed, all of which are specified below:

| | |
|---|---|
| 100 grams | $H_3PO_4$ |
| 15 grams | $H_2SO_4$ |
| 2 drops | 2-ethylhexanol defoamer |
| 8.9 grams | 2-amino-3-cyano-4,5-tetramethylene thiophene |
| 17.5 grams | nitrosyl sulfuric acid |
| 1 gram | sulfamic acid |
| 60.5 grams | m-toluidine 2EO/15PO/2EO |
| 120 grams | ice |
| A red oil resulted. | |

Example 6

A masterbatch for the production of polyurethane foam was prepared by adding 3000 grams of Niax-16-56 (a 3000 molecular weight triol available from Union Carbide) 125.1 grams of water, and 7.8 grams of

Dabco 33LV (amine catalyst available from Air Products) to a 3.5 $m^3$ plastics jug. The batch was mixed well and stored at 18 C for further use.

Example 7

A polyether polyurethane foam (control) was produced as follows. 104 grams of the masterbatch of Example 6 were added to a 400 milliliter disposable beaker, and one gram of a reactive colorant as taught herein was added thereto along with one milliliter of Liquid Silicone L-520 (available from Union Carbide). The mixture was stirred in a blender for 25-30 seconds, 0.20 milliliters of T-9 (stannous octanoate catalyst) added thereto from a syringe, and stirred for an additional 5-8 seconds. Thereafter, 46 milliliters of toluene diisocyanate were added to the beaker and the mixture stirred for six seconds. A blended, homogenous mixture resulted and was poured into an paper bucket. The mixture foamed, and after the foam stopped rising, was cured in an oven at 130°C for 15 minutes.

Example 8

Polyurethane foam samples containing a flame retardant were produced as described in Example 7 with the exception that 10 grams of Thermolin T-101 flame retardant (available from Olin) were added to the beaker with the other components, and the foam sample was cured at 130°C for 30 minutes. The foam of this Example possessed flame retardant properties.

As discussed above, while a number of colorants have heretofore been utilized for in situ coloration of polymeric materials, polyurethane foams present somewhat special problems. Specifically, the colorant must be stable to tin catalysts utilized in the production of the urethane, and also stable to flame retardants that are normally included in the polymer.

Instability as to the stannous tin catalysts, results in reduction of the dyestuff leading to significant, if not total, loss of color. Additionally, the foam producing process is also adversely affected. The foam does not rise at a proper rate and does not cure at a fast enough rate. A tacky polyurethane with poor polymer properties results. It is thus important that colorants for polyurethanes be stable to the tin catalysts. This is a desirable and qualifying characteristic of colorants of the present invention.

Also with instability to flame retardants, a color change or color shift will appear which renders an unstable colorant useless. Typically colorants unstable to flame retardants change color as follows: red to violet and orange to red. While a number of commercially available dyestuffs are not stable in the presence of the flame retardants, colorants of the present invention do possess such stability.

In order to demonstrate stability to both the tin catalysts and flame retardants, Examples 7 and 8 were reproduced with a number of different specific colorants, both according to the present invention and otherwise. Example 7 (without flame retardant) serves as a control for evaluation of stability to flame retardants. The tin stability test is set forth in Example 9.

Example 9

Tests were also conducted as to tin stability according to the following procedure. First the color value for the colorants tested was determined by placing about 0.10 to 0.15 grams of colorant into a 100 milliliter volumetric flask and adding approximately 40 to 50 milliliters of methanol. The flask was swirled until the colorant dissolved in the methanol, after which excess methanol was added to the 100 milliliter mark on the flask. The flask was stoppered and the contents were mixed and shaken. Exactly 2.0 milliliters of the solution of the colorant in methanol was then added to a separate like flask and the flask was filled with methanol to the 100 milliliter mark, stoppered and shaken.

A Beckman DU-7 spectrometer was zeroed with methanol, filled with the test solution, and the solution was scanned from 300 to 750 mm. The maximum absorbance was recorded. Color value is obtained by multiplying the sample weight by 0.2 and dividing the product obtained into the maximum absorbance value.

In the case of liquid phase colorant, the colorant to be tested was then added to a 50 milliliter volumetric flask.

In order to correct for varying color strengths the amount of colorant added was determined by the following formula:

5/(Color value) = number of grams added.

Then 35 milliliters of 2-ethoxyethyl ether or 2-methoxyethyl ether were added to dissolve the colorant. Further solvent was then added to bring the total contents to the 50 milliliter mark. The flask was stoppered and shaken. Exactly 2.0 milliliters of this solution were transferred to a further 50 milliliter flask and diluted to the 50 milliliter mark with one of the solvents.

In the case of solid colorant to be tested colorant to be tested was added to a 100 ml volumetric flask. In order to correct for varying color strengths the amount of colorant added was determined as follows:

5/2 (color value) = number of grams added.

Then 35 ml of 2-ethoxyethyl ether or 2-methoxyethyl ether solvent were added to dissolve the colorant. An additional amount of solvent was added to bring the level in the volumetric flask to the 100 ml mark; a stopper was inserted, and the contents of the flask were mixed well by shaking. Exactly 4.0 ml of this solution were then transferred to another 100 ml volumetric flask and diluted to the 100 ml mark with solvent.

A solution of T-9 (stannous octanoate) was prepared with minimum air exposure by dissolving 0.70 gram of stannous octanoate in seven milliliters of solvent in a vial which was kept sealed between runs. The Beckman spectrometer was set up for repetitive scanning. Two milliliters of colorant solution (either solid or liquid as described above) were placed into a vial with 2.0 milliliters of the tin catalyst solution and mixed well. The mixture was then transferred to the cell of the spectrometer which was capped and quickly placed into the spectrometer (not more than 20 to 30 seconds elapsed time). Five repetitive scans were then made for each colorant sample at three intervals. The percentage loss after fifteen minutes (5 scans) was measured from initial absorbance and last absorbance.

A number of commercially useful benzothiazole colorants were investigated as to stability to flame retardants. In the control test, i.e., no flame retardant present, following the procedures of Example 7, all of the compounds tested passed, indicating no color change. When, however, the same compounds were included in production of foam according to Example 8 where the flame retardant was included, all of the compounds failed.

## Example 10

In like fashion to the benzothiazole investigations, a number of colorants according to the present invention were prepared according to the general procedures set forth in Examples 1 through 5. Thereafter, the colorants were utilized in the coloration of polyurethane foams as described in Examples 7 and 8 to determine stability of same to flame retardants. All of the thiophene compounds passed both tests, indicating stability to flame retardants. Compounds tested are listed in Table I below.

The following abbreviations are utilized in the following tables: Et = ethyl; EO = ethylene oxide; PO = propylene oxide; ME = methyl; Ac = acetate. Also where numbers are separated by diagonals, eg. 2/15/5, such refers to moles EO/moles PO/moles EO.

Table I

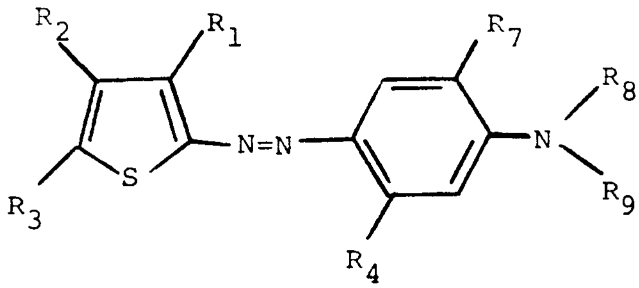

| Ex. No. | $R_1$ | $R_2$ | $R_3$ | $R_4$ | $R_7$ | $R_8$, $R_9$ |
|---|---|---|---|---|---|---|
| 11 | $CO_2Et$ | H | $C_6H_5$ | H | H | 2/15/5 |
| 12 | $CO_2Et$ | Me | CN | H | H | do |
| 13 | do | do | do | Me | do | do |
| 14 | do | do | do | OMe | OMe | 2/10/5 |
| 15 | do | do | COMe | H | H | 2/15/5 |
| 16 | CN | do | $CO_2Me$ | do | do | do |
| 17 | $C_6H_5$ | H | $COC_6H_5$ | do | do | do |
| 18 | $C_6H_5$ | do | do | Cl | do | do |
| 19 | do | do | do | Cl | do | 2/10/6 |
| 20 | $CO_2Et$ | Me | $CONHC_6H_5$ | H | H | do |
| 21 | do | do | do | Me | do | 2/15/5 |
| 22 | do | do | do | H | do | do |
| 23 | do | do | $CO_2Et$ | do | do | do |
| 24 | do | do | do | Cl | do | 2/10/6 |
| 25 | do | do | do | Me | do | 2/15/2 |
| 26 | $CO_2Me$ | do | $CO_2Me$ | H | do | 2/15/5 |
| 27 | do | do | do | do | do | 2/10/6 |
| 28 | $CO_2Et$ | do | $CO_2Et$ | do | do | 2/15/5 |

| | | | | | | |
|---|---|---|---|---|---|---|
| 29 | do | do | do | Cl | do | do |
| 30 | $CO_2Me$ | do | $CO_2Me$ | do | do | do |
| 31 | do | do | $CO_2Et$ | H | do | 2/10/6 |
| 32 | CN | do | CN | OMe | OMe | 2/10/5 |
| 33 | do | do | do | Me | H | 2/15/5 |
| 34 | do | do | do | do | do | 2/15/2 |
| 35 | do | do | do | do | do | 2/10/8 |
| 36 | do | do | do | do | do | 2/7/6 |
| 37 | do | do | do | do | do | 2/10/6 |
| 38 | do | do | do | H | do | 2/15/5 |
| 39 | do | do | do | Me | H | 2EO |
| 40 | do | do | do | OMe | OMe | do |
| 41 | do | do | do | NHAc | OMe | do |
| 42 | do | $-(CH_2)_4-$ | | H | H | do |
| 43 | $CO_2Et$ | Me | $CO_2Et$ | do | do | do |
| 44 | $CO_2Me$ | H | $COCHMe_2$ | NHAc | OMe | do |
| 45 | $CO_2Et$ | $-(CH_2)_4-$ | | Me | H | 2/15/2 |
| 46 | do | $-(CH_2)_4-$ | | H | do | 2/15/5 |
| 47 | do | do | | Me | do | 2/15/8 |
| 48 | do | do | | H | do | 2/10/6 |
| 49 | do | do | | Me | do | 2/15/8 |
| 50 | $CO_2Et$ | do | | H | H | 2/15/5 |
| 51 | $CO_2Me$ | H | $COCHMe_2$ | Me | H | 2/15/2 |
| 52 | $CONHC_2H_4OH$ | do | do | do | do | do |
| 53 | $CO_2Me$ | do | do | OMe | do | 2/10/5 |
| 54 | $CONHC_2H_4OH$ | do | do | do | OMe | do |
| 55 | do | do | do | NHAc | do | do |

For Examples 11, 12, 13, 15 to 31, 42, 43 and 45 to 50, the colour was red. For Examples 14, 32 to 39, 44, 51 and 53, the colour was violet. For Examples 40, 41, 52, 54 and 55, the colour was blue.

Some of the same benzothiophenes, and other novel compounds of the invention, were also tested as to stability with respect to the stannous octanoate catalyst, according to the test procedures set forth in Example 9. Compounds and loss results are given in Table II. Table III gives the results for some

benzothiazoles.

The colour for each of Examples 68 to 74 was red. The colours for the compounds of Examples 12, 15, 25 and 38 to 43 were as given above; the colour was red for Examples 56, 58, 60 and 62 to 66, blue for Examples 57 and 67, and violet for Examples 59 and 69. Only the benzothiophenes were stable to the effect of the tin catalyst.

TABLE II

| Ex. No. | $R_1$ | $R_2$ | $R_3$ | $R_4$ | $R_7$ | $R_8$, $R_9$ | % Loss |
|---|---|---|---|---|---|---|---|
| 25 | $CO_2Et$ | Me | $CO_2Et$ | Me | H | 2/15/2 | 5.3 |
| 38 | CN | do | CN | H | do | 2/15/5 | 0.0 |
| 12 | $CO_2Et$ | do | do | do | do | do | 3.3 |
| 56 | CN | do | $CO_2Et$ | do | do | 2/15/8 | 2.9 |
| 24 | $CO_2Et$ | do | do | Cl | do | 2/10/6 | 2.7 |
| 57 | CN | do | CN | OMe | OMe | do | 6.2 |
| 58 | $CO_2Et$ | do | do | CN | H | 2/15/2 | 4.0 |
| 59 | CN | do | $CO_2Et$ | H | do | 2/15/5 | 5.9 |
| 15 | $CO_2Et$ | do | COMe | do | do | do | 4.8 |
| 60 | do | do | $CONHC_6H_5$ | Me | do | 2/15/2 | 3.0 |
| 61 | CN | do | CN | OMe | do | 12EO | 7.0 |
| 62 | $CO_2Et$ | H | $C_6H_5$ | H | do | 2/15/2 | 3.8 |
| 63 | do | do | do | Cl | do | 2/10/6 | 1.6 |
| 64 | CN | $-(CH_2)_4-$ | | H | H | do | 3.2 |
| 65 | do | do | | Me | do | 2/15/8 | 2.3 |
| 66 | do | do | | H | do | 2/15/5 | 0.9 |
| 39 | CN | Me | CN | Me | H | 2EO | 3.9 |
| 40 | do | do | do | OMe | OMe | do | 4.2 |
| 41 | do | do | do | NHAc | do | do | 4.4 |
| 42 | do | $-(CH_2)_4-$ | | H | H | do | 2.1 |
| 43 | $CO_2Et$ | Me | $CO_2Et$ | do | do | do | 5.6 |
| 67 | do | H | $COCHMe_2$ | NHAc | OMe | do | 4.8 |

Table III

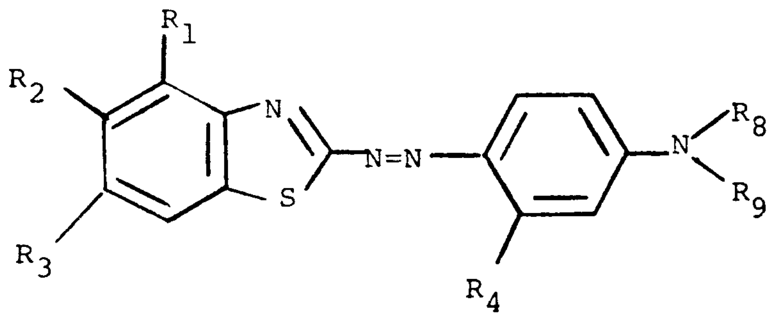

| Ex. No. | $R_1$ | $R_2$ | $R_3$ | $R_4$ | $R_8,R_9$ | % Loss |
|---|---|---|---|---|---|---|
| 68 | H | H | OMe | Me | 10EO | 56.5 |
| 69 | Cl | do | H | H | 2/15/5 | 91.5 |
| 70 | OMe | do | do | OMe | 12EO | 66.7 |
| 71 | Me | do | Cl | H | 2/10/5 | 85.9 |
| 72 | Cl | do | H | Cl | 2/15/5 | 97.8 |
| 73 | do | do | Cl | H | do | 87.9 |
| 74 | H | Cl | do | do | do | 100.0 |

## Claims

**Claims for the following Contracting States : BE, CH, DE, FR, GB, IT, LU, NL, SE**

**1.** A process for preparing a coloured polyurethane resin, which comprises subjecting a mixture of an isocyanate and a polyol to a polyurethane-forming polyaddition reaction and, before or during the reaction, adding to the mixture a reactive colouring agent which is effectively resistant to stannous octanoate and flame retardant compounds and which is of the formula

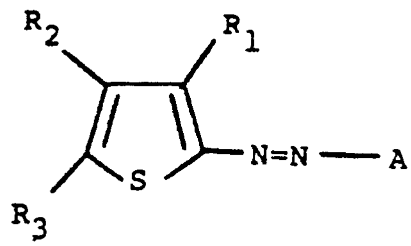

wherein either $R_1$, $R_2$ and $R_3$ are independently selected from halogen, carboxyl, alkanoyl, aroyl, alkyl, aryl, cyano, alkylsulfonyl, arylsulfonyl, alkylthio, arylthio, alkylsulfinyl, arylsulfinyl, alkyldithio, aryldithio, thiocyano, alkylaminocarbonyl, dialkylaminocarbonyl, alkoxy, aryloxy, hydrogen, alkylaminosulfonyl, arylaminosulfonyl, dialkylaminosulfonyl diarylaminosulfonyl, alkylaminosulfinyl, dialkylaminosulfinyl, arylaminosulfinyl, diarylaminosulfinyl, alkylaminothio, dialkylaminothio, arylaminothio and diarylaminothio, or one of $R_1$, $R_2$ and $R_3$ is as defined above and the other two are a divalent polymethylene radical, thus forming a carbocylic ring with the carbon atoms to which they are bound; and

A is the radical of a dyestuff coupler which has functionality by virtue of one or more reactive substituents.

**2.** A compound of the formula

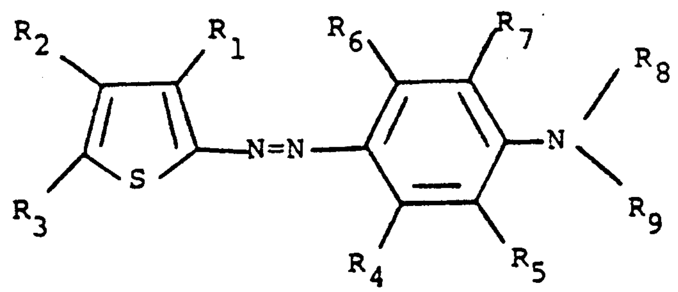

wherein $R_1$, $R_2$ and $R_3$ are as defined in claim 1 or alkoxycarbonyl;

$R_4$, $R_5$, $R_6$ and $R_7$ are independently selected from hydrogen, alkyl, alkoxy, aryloxy, alkylaminosulfonyl, dialkylaminosulfonyl, arylaminosulfonyl, diarylaminosulfonyl, alkylaminocarbonyl, dialkylaminocarbonyl, arylaminocarbonyl, diarylaminocarbonyl, halogen, alkylthio and arylthio; and

$R_8$ and $R_9$ are independently selected from polyalkylene oxide radicals, radicals of copolymers of polyalkylene oxides, and radicals of hydroxyalkylenes.

**3.** A compound of claim 2, wherein either $R_1$, $R_2$ and $R_3$ are independently selected from halogen, carboxyl alkanoyl, aroyl, alkyl, aryl, cyano, alkylthio, alkyldithio, arylthio, aryldithio, thiocyano, alkylaminocarbonyl, dialkylaminocarbonyl, arylaminocarbonyl, diarylaminocarbonyl, alkoxy, alkylaminothio, dialkylaminothio and (when an adjacent group is isobutyryl) hydrogen, or one of $R_1$, $R_2$ and $R_3$ is as defined above and the other two are a divalent polymethylene radical.

**4.** A compound of claim 2, wherein $R_1$, $R_2$ and $R_3$ are independently selected from cyano, lower alkyl, a carbocyclic-forming polymethylene chain, alkoxycarbonyl, alkanoyl, arylcarbonylamino and hydrogen when an adjacent group is isobutyryl.

**5.** A compound of any of claims 2 to 4, wherein $R_4$, $R_5$, $R_6$ and $R_7$ are independently selected from hydrogen, halogen and alkyl.

**6.** A compound of any of the ten formulae

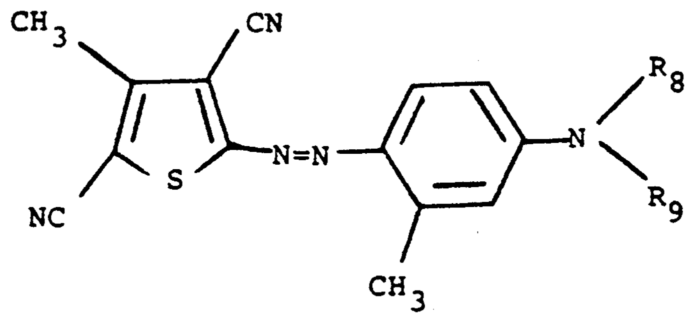

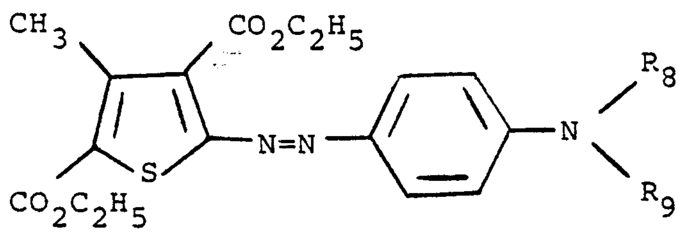

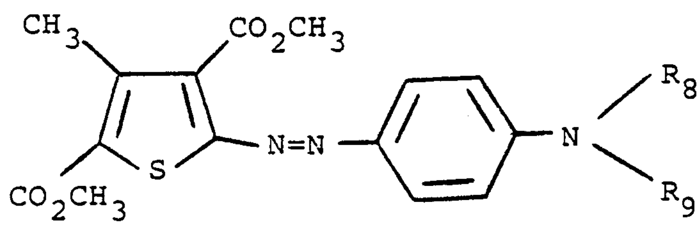

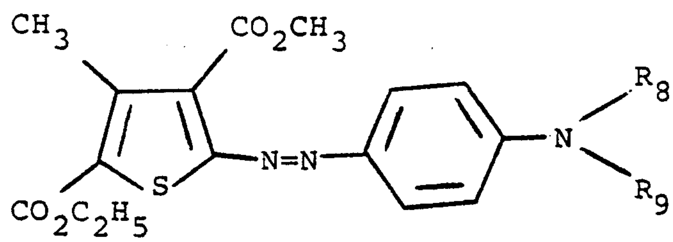

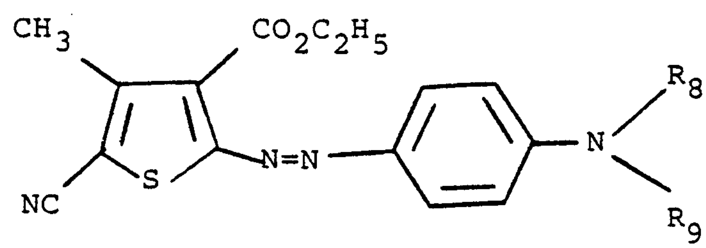

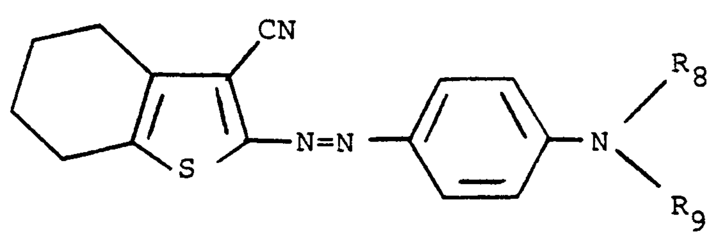

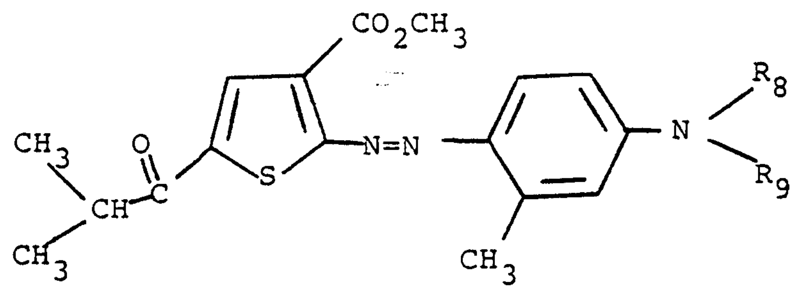

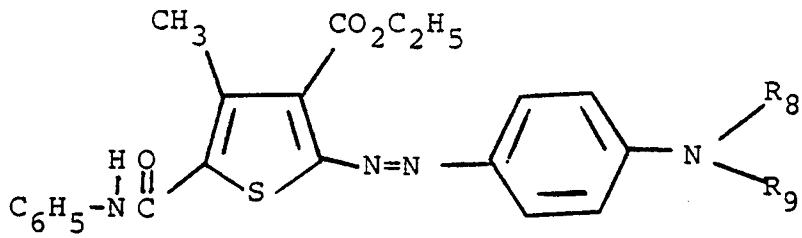

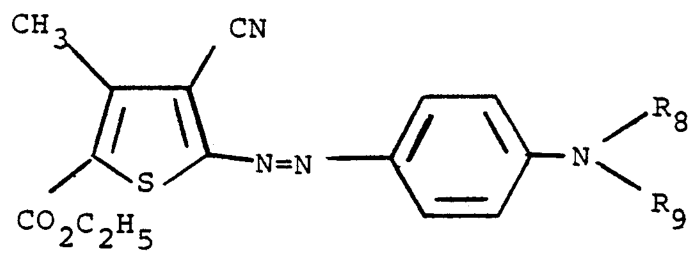

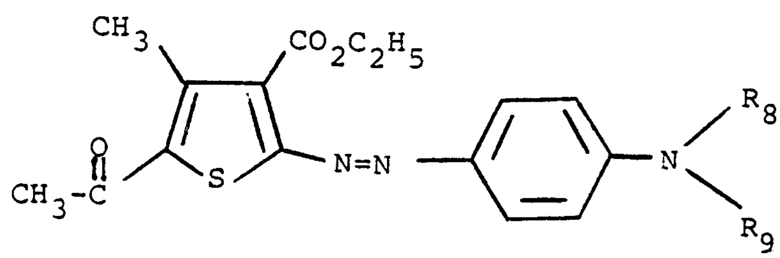

wherein $R_8$ and $R_9$ are as defined in claim 2.

**7.** A compound of any of claims 2 to 6, wherein $R_8$ and $R_9$ are independently selected from polyalkylene oxide radicals and radicals of copolymers of polyalkylene oxides having an average molecular weight of from 44 to 2500.

**8.** A process according to claim 1, wherein the coloring agent is a compound of any of claims 2 to 7.

**9.** A process according to claim 1, wherein the coloring agent has the formula

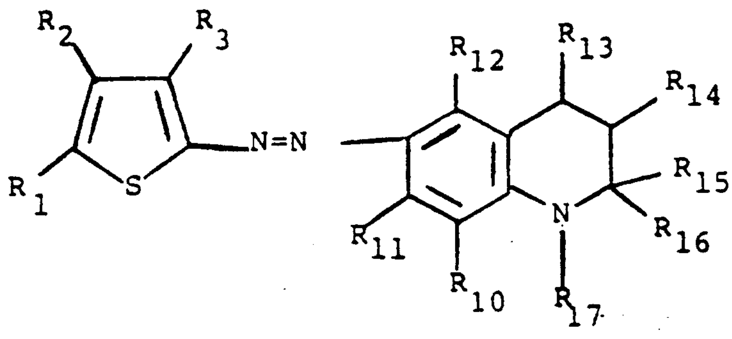

wherein $R_1$, $R_2$ and $R_3$ are as defined in claim 1;

$R_{10}$, $R_{12}$, $R_{13}$ and $R_{14}$ are independently selected from hydrogen and lower alkyl;

$R_{11}$ is hydrogen, lower alkyl, alkylaminocarbonyl, arylaminocarbonyl, alkylaminosulfonyl or arylaminosulfonyl;

$R_{15}$ and $R_{16}$ are the same or different lower alkyl; and

$R_{17}$ is a polyalkylene oxide radical, a radical of a copolymer of polyalkylene oxides, or a hydroxyalkylene radical.

**10.** A process according to claim 1, wherein the coloring agent has the formula

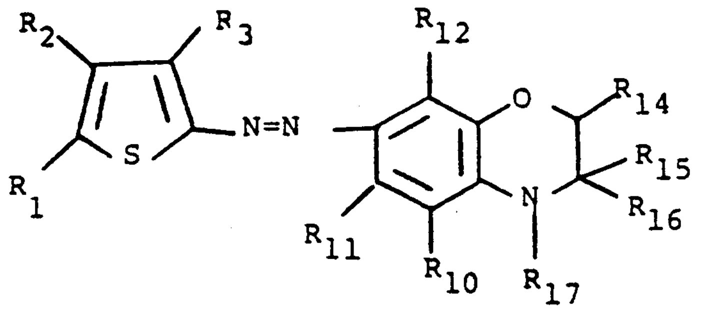

wherein $R_1$, $R_2$ and $R_3$ are as defined in claim 1; and

$R_{10}$, $R_{11}$, $R_{12}$, $R_{14}$, $R_{15}$, $R_{16}$ and $R_{17}$ are as defined in claim 9.

**11.** A process according to any of claims 1 and 8 to 10, wherein the resin is foamed.

**12.** A process according to any of claims 1 and 8 to 11, wherein the resin includes a flame-retardant.

**13.** A process according to any of claims 1 and 8 to 12, wherein any alkyl or alkylene group has up to 8 C atoms and any aryl group has up to 12 C atoms.

**14.** A process according to any of claims 1 and 8 to 13, wherein $R_1$ and/or $R_3$ is CN, CO, SO or $SO_2$-containing.

**15.** A process according to any of claims 1 and 8 to 14, wherein none of $R_1$, $R_2$ and $R_3$ is alkanoyl or aroyl.

**16.** A compound according to any of claims 2 to 7, wherein any alkyl or alkylene group has up to 8 C atoms and any aryl group has up to 12 C atoms.

**17.** A compound of any of claims 2 to 7 and 16, wherein $R_1$ and/or $R_3$ is CN, CO, SO or $SO_2$-containing.

**18.** A compound of any of claims 2 to 7, 16 and 17, wherein none of $R_1$, $R_2$ and $R_3$ is alkanoyl or aroyl.

**Claims for the following Contracting State : AT**

**1.** A process for preparing a coloured polyurethane resin, which comprises subjecting a mixture of an isocyanate and a polyol to a polyurethane-forming polyaddition reaction and, before or during the reaction, adding to the mixture a reactive colouring agent which is effectively resistant to stannous octanoate and flame retardant compounds and which is of the formula

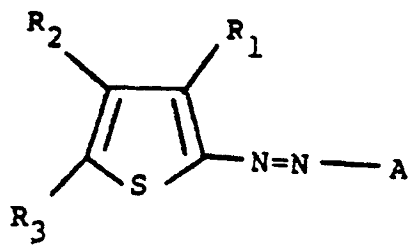

wherein either $R_1$, $R_2$ and $R_3$ are independently selected from halogen, carboxyl, alkanoyl, aroyl, alkyl, aryl, cyano, alkylsulfonyl, arylsulfonyl, alkylthio, arylthio, alkylsulfinyl, arylsulfinyl, alkyldithio, aryldithio, thiocyano, alkylaminocarbonyl, dialkylaminocarbonyl, alkoxy, aryloxy, hydrogen, alkylaminosulfonyl, arylaminosulfonyl, dialkylaminosulfonyl, diarylaminosulfonyl, alkylaminosulfinyl, dialkylaminosulfinyl, arylaminosulfinyl, diarylaminosulfinyl, alkylaminothio, dialkylaminothio, arylaminothio and diarylaminothio, or one of $R_1$, $R_2$ and $R_3$ is as defined above and the other two are a divalent polymethylene radical, thus forming a carbocylic ring with the carbon atoms to which they are bound; and

A is the radical of a dyestuff coupler which has functionality by virtue of one or more reactive substituents.

**2.** A process according to claim 1, wherein the coloring agent is a compound of the formula

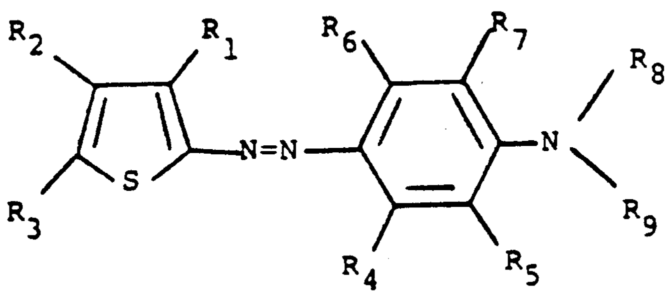

wherein $R_1$, $R_2$ and $R_3$ are as defined in claim 1 or alkoxycarbonyl;

$R_4$, $R_5$, $R_6$ and $R_7$ are independently selected from hydrogen, alkyl, alkoxy, aryloxy, alkylaminosulfonyl, dialkylaminosulfonyl, arylaminosulfonyl, diarylaminosulfonyl, alkylaminocarbonyl, dialkylaminocarbonyl, arylaminocarbonyl, diarylaminocarbonyl, halogen, alkylthio and arylthio; and

$R_8$ and $R_9$ are independently selected from polyalkylene oxide radicals, radicals of copolymers of polyalkylene oxides, and radicals of hydroxyalkylenes.

**3.** A process according to claim 2, wherein either $R_1$, $R_2$ and $R_3$ are independently selected from halogen, carboxyl, alkanoyl, aroyl, alkyl, aryl, cyano, alkylthio, alkyldithio, arylthio, aryldithio, thiocyano, alkylaminocarbonyl, dialkylaminocarbonyl, arylaminocarbonyl, diarylaminocarbonyl, alkoxy, alkylaminothio, dialkylaminothio and (when an adjacent group is isobutyryl) hydrogen, or one of $R_1$, $R_2$ and $R_3$ is as defined above and the other two are a divalent polymethylene radical.

**4.** A process according to claim 2, wherein $R_1$, $R_2$ and $R_3$ are independently selected from cyano, lower alkyl, a carbocyclic-forming polymethylene chain, alkoxycarbonyl, alkanoyl, arylaminocarbonyl, and hydrogen when an adjacent group is isobutyryl.

**5.** A process according to any of claims 2 to 4, wherein $R_4$, $R_5$, $R_6$ and $R_7$ are independently selected from hydrogen, halogen and alkyl.

**6.** A process according to claim 2, wherein the compound has any of the ten formulae

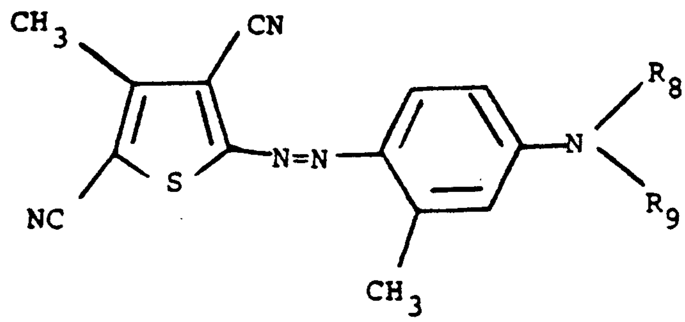

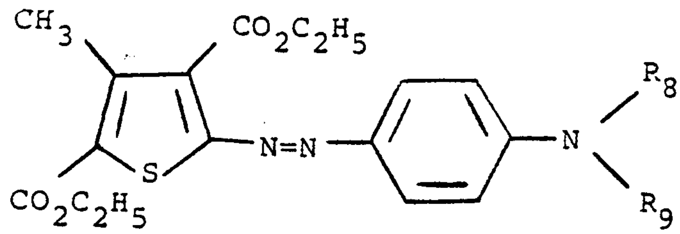

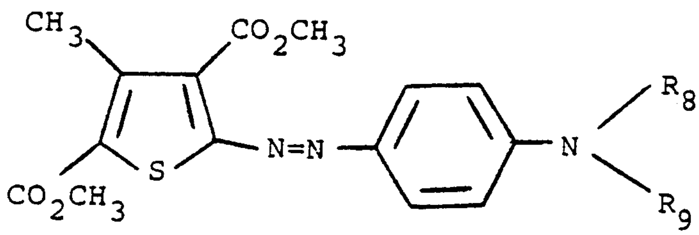

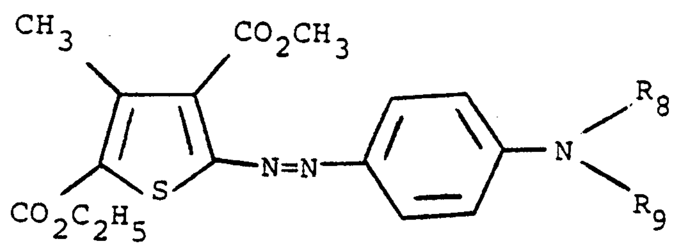

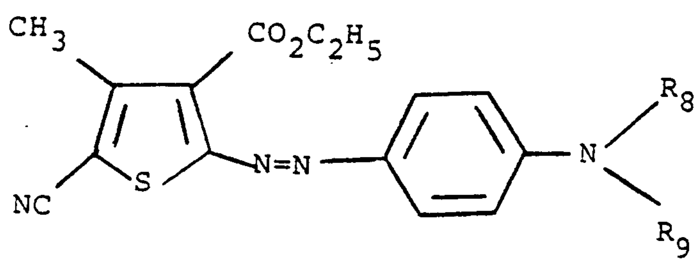

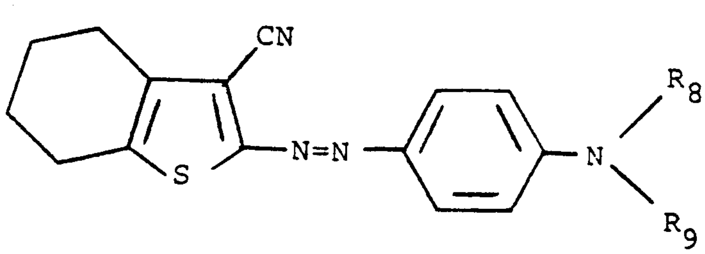

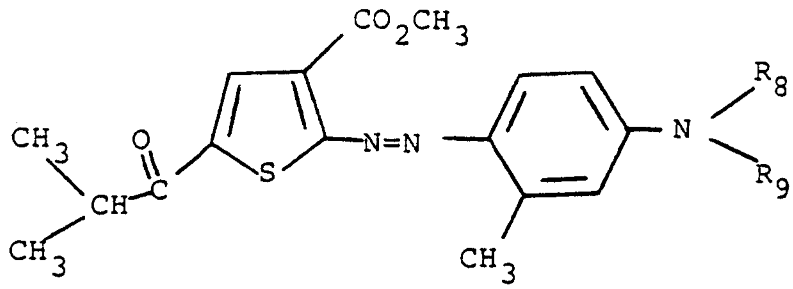

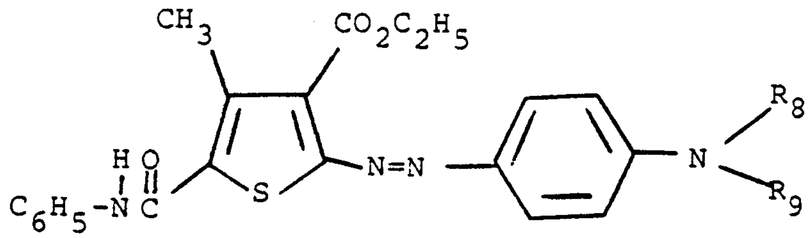

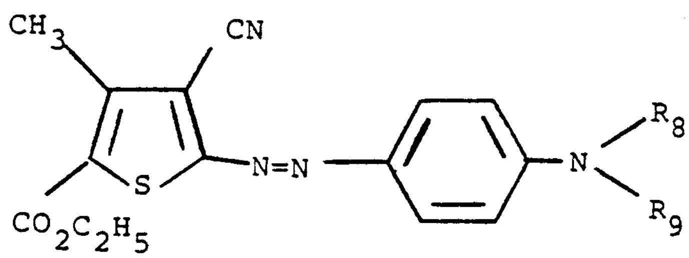

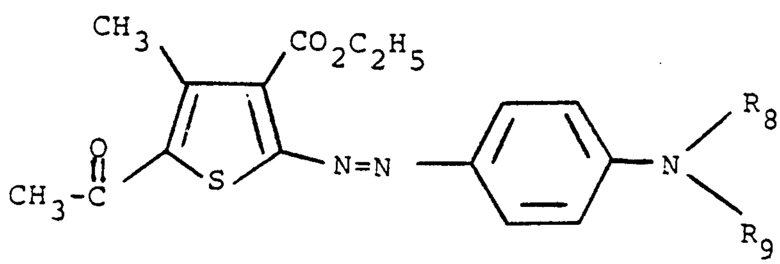

wherein $R_8$ and $R_9$ are as defined in claim 2.

**7.** A process according to any of claims 2 to 6, wherein $R_8$ and $R_9$ are independently selected from polyalkylene oxide radicals and radicals of copolymers of polyalkylene oxides having an average molecular weight of from 44 to 2500.

**8.** A process according to claim 1, wherein the coloring agent has the formula

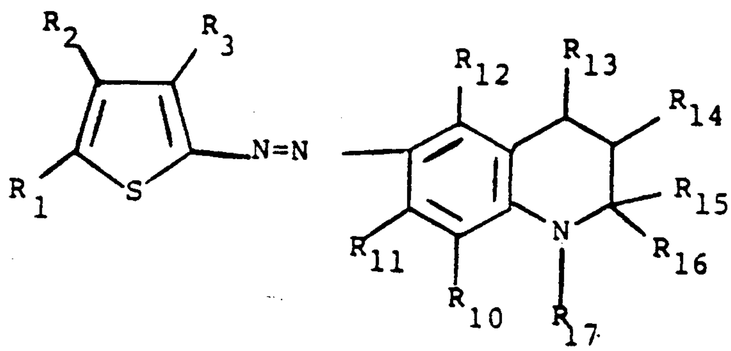

wherein $R_1$, $R_2$ and $R_3$ are as defined in claim 1;

$R_{10}$, $R_{12}$, $R_{13}$ and $R_{14}$ are independently selected from hydrogen and lower alkyl;

$R_{11}$ is hydrogen, lower alkyl, alkylaminocarbonyl, arylaminocarbonyl, alkylaminosulfonyl or arylaminosulfonyl;

$R_{15}$ and $R_{16}$ are the same or different lower alkyl; and

$R_{17}$ is a polyalkylene oxide radical, a radical of a copolymer of polyalkylene oxides, or a hydroxyalkylene radical.

**9.** A process according to claim 1, wherein the coloring agent has the formula

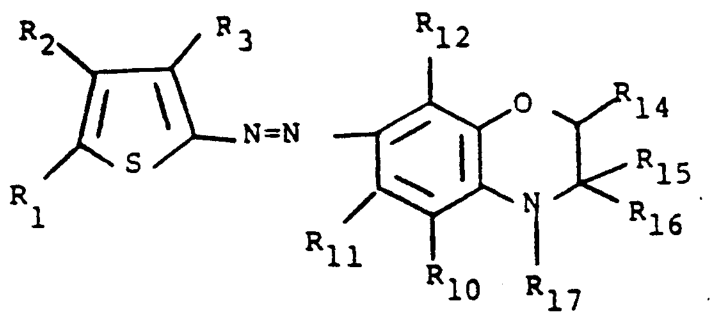

wherein $R_1$, $R_2$ and $R_3$ are as defined in claim 1; and

$R_{10}$, $R_{11}$, $R_{12}$, $R_{14}$, $R_{15}$, $R_{16}$ and $R_{17}$ are as defined in claim 9.

**10.** A process according to any preceding claim, wherein the resin is foamed.

**11.** A process according to any preceding claim, wherein the resin includes a flame-retardant.

**12.** A process according to any preceding claim, wherein any alkyl or alkylene group has up to 8 C atoms and any aryl group has up to 12 C atoms.

**13.** A process according to any preceding claim, wherein $R_1$ and/or $R_3$ is CN, CO, SO or $SO_2$-containing.

**14.** A process according to any preceding claim, wherein none of $R_1$, $R_2$ and $R_3$ is alkanoyl or aroyl.

**Patentansprüche**

**Patentansprüche für folgenden Vertragsstaaten : BE, CH, DE, FR, GB, IT, LU, NL, SE**

**1.** Verfahren zur Herstellung eines gefärbten Polyurethanharzes, umfassend die Durchführung einer Polyurethan-bildenden Polyadditionsreaktion bei einem Gemisch aus einem Isocyanat und einem Polyol und, vor oder während der Reaktion, Zugabe eines reaktionsfähigen Färbemittels zu dem Gemisch, das beständig ist gegenüber Zinn-II-octanoat und flammverzögernden Verbindungen und das die (folgende) allgemeine Formel besitzt,

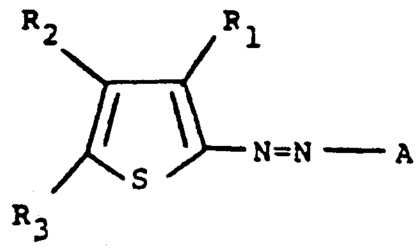

in der $R_1$, $R_2$ und $R_3$ jeweils unabhängig ausgewählt sind aus Halogen, Carboxyl, Alkanoyl, Aroyl, Alkyl, Aryl, Cyano, Alkylsulfonyl, Arylsulfonyl, Alkylthio, Arylthio, Alkylsulfinyl, Arylsulfinyl, Alkyldithio, Aryldithio, Thiocyano, Alkylaminocarbonyl, Dialkylaminocarbonyl, Alkoxy, Aryloxy, Wasserstoff, Alkylaminosulfonyl, Arylaminosulfonyl, Dialkylaminosulfonyl, Diarylaminosulfonyl, Alkylaminosulfinyl, Dialkylaminosulfinyl, Arylaminosulfinyl, Diarylaminosulfinyl, Alkylaminothio, Dialkylaminothio, Arylaminothio und Diarylaminothio oder einer der Reste $R_1$, $R_2$ und $R_3$, wie oben definiert ist, und die beiden anderen einen zweiwertigen Polymethylenrest bedeuten, und so einen carbocyclischen Ring mit den Kohlenstoffatomen, an die sie gebunden sind, bilden; und

A der Rest eines Farbstoffkupplers ist, der durch einen oder mehrere reaktionsfähige Substituenten funktionell ist.

**2.** Verbindung der Formel

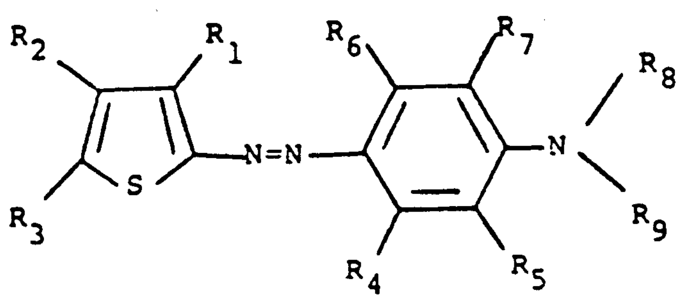

in der $R_1$, $R_2$ und $R_3$ wie in Anspruch 1 definiert sind, oder eine Alkoxycarbonylgruppe bedeuten;

$R_4$, $R_5$, $R_6$ und $R_7$ unabhängig voneinander ausgewählt sind aus Wasserstoff, Alkyl, Alkoxy, Aryloxy, Alkylaminosulfonyl, Dialkylaminosulfonyl, Arylaminosulfonyl, Diarylaminosulfonyl, Alkylaminocarbonyl, Dialkylaminocarbonyl, Arylaminocarbonyl, Diarylaminocarbonyl, Halogen, Alkylthio und Arylthio; und

$R_8$ und $R_9$ unabhängig voneinander ausgewählt sind aus Polyalkylenoxidresten, Resten von Copolymeren von Polyalkylenoxiden und Resten von Hydroxyalkylenen.

**3.** Verbindung nach Anspruch 2, wobei entweder $R_1$, $R_2$ und $R_3$ unabhängig voneinander ausgewählt sind aus Halogen, Carboxyl, Alkanoyl, Aroyl, Alkyl, Aryl, Cyano, Alkylthio, Alkyldithio, Arylthio, Aryldithio, Thiocyano, Alkylaminocarbonyl, Dialkylaminocarbonyl, Arylaminocarbonyl, Diarylaminocarbonyl, Alkoxy, Alkylaminothio, Dialkylaminothio und (wenn eine angrenzende Gruppe Isobutyryl ist) Wasserstoff oder einer der Reste $R_1$, $R_2$ und $R_3$, wie oben definiert ist, und die beiden anderen einen zweiwertigen Polymethylenrest bedeuten.

**4.** Verbindung nach Anspruch 2, wobei $R_1$, $R_2$ und $R_3$ unabhängig voneinander ausgewählt sind aus Cyano, nieder-Alkyl, eine carbocyclische Gruppe bildende Polymethylenkette, Alkoxycarbonyl, Alkanoyl, Arylcarbonylamin und Wasserstoff, wenn eine angrenzende Gruppe Isobutyryl ist.

**5.** Verbindung nach einem der Ansprüche 2 bis 4, wobei $R_4$, $R_5$, $R_6$ und $R_7$ unabhängig voneinander ausgewählt sind aus Wasserstoff, Halogen und Alkyl.

**6.** Verbindung nach einer der 10 Formeln

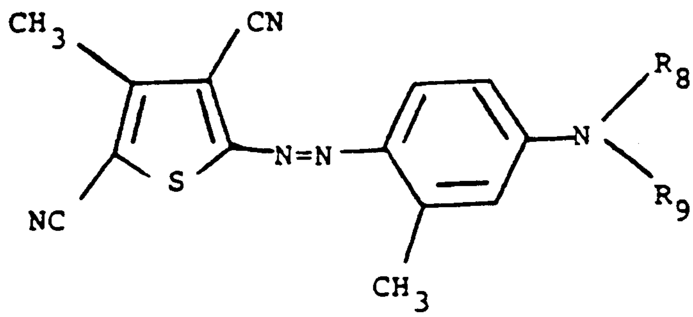

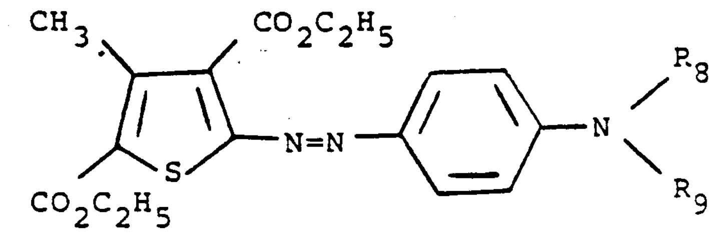

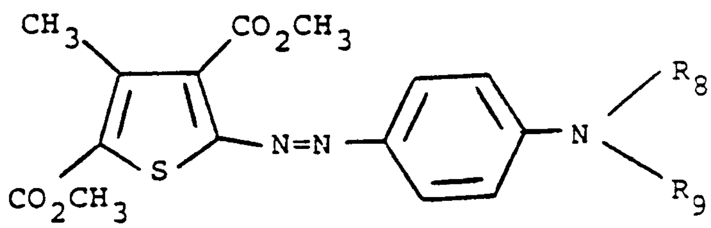

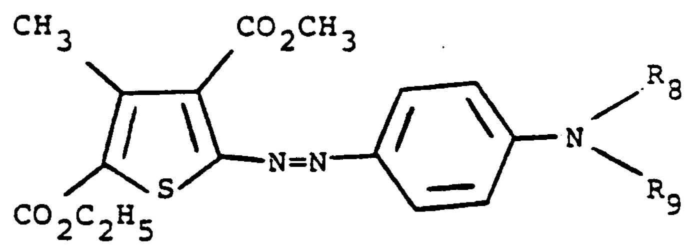

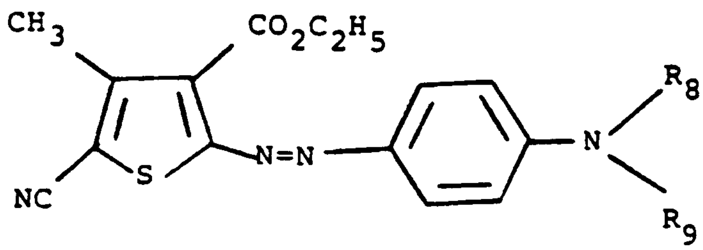

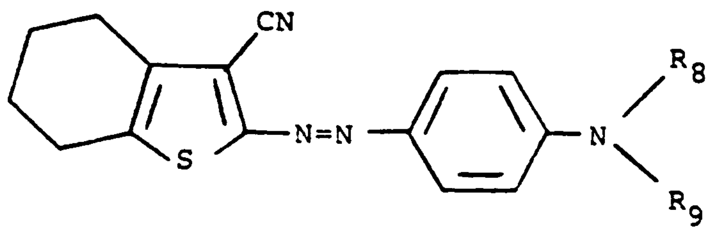

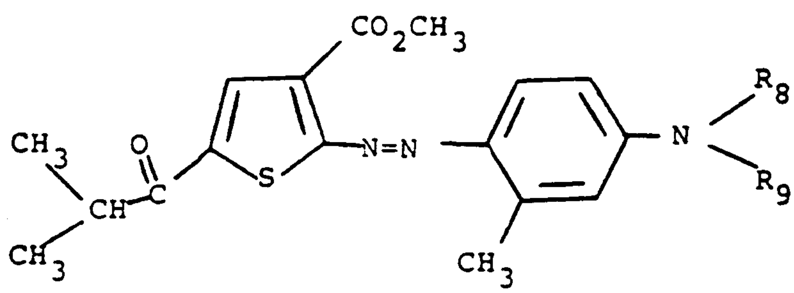

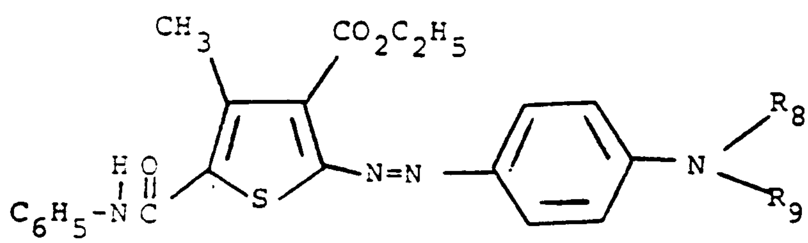

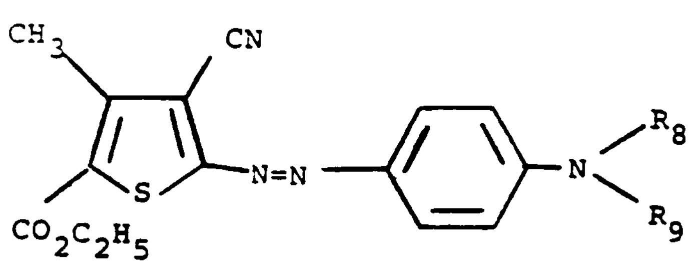

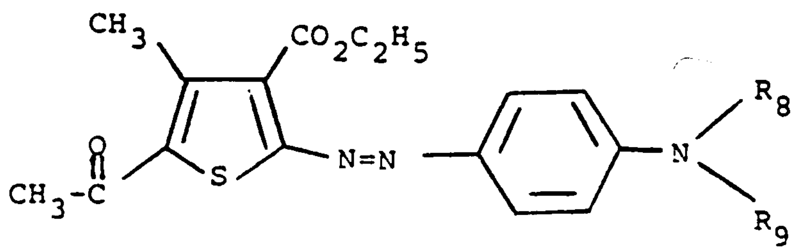

wobei $R_8$ und $R_9$ wie in Anspruch 2 definiert sind.

**7.** Verbindungen nach einem der Ansprüche 2 bis 6, wobei $R_8$ und $R_9$ unabhängig voneinander ausgewählt sind aus Polylakylenoxidresten und Resten von Copolymeren von Polyalkylenoxiden mit einem mittleren Molekulargewicht von 44 bis 2500.

**8.** Verfahren nach Anspruch 1, wobei das Färbemittel eine Verbindung nach einem der Ansprüche 2 bis 7 ist.

**9.** Verfahren nach Anspruch 1, wobei das Färbemittel die Formel besitzt,

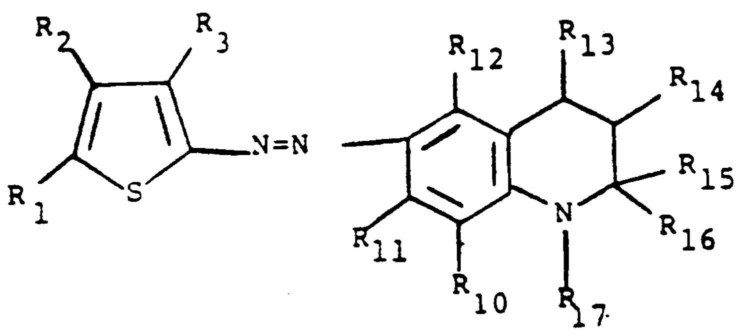

wobei $R_1$, $R_2$ und $R_3$ wie in Anspruch 1 definiert sind;

$R_{10}$, $R_{12}$, $R_{13}$ und $R_{14}$ unabhängig voneinander ausgewählt sind aus Wasserstoff und nieder-Alkyl.

$R_{11}$ Wasserstoff, nieder-Alkyl, Alkylaminocarbonyl, Arylaminocarbonyl, Alkylaminosulfonyl oder Arylaminosulfonyl ist;

$R_{15}$ und $R_{16}$ gleiche oder verschiedene nieder-Alkylgruppen sind; und

$R_{17}$ ein Polyalkylenoxidrest, ein Rest eines Copolymers von Polyalkylenoxiden oder ein Hydroxyalkylenrest ist.

**10.** Verfahren nach Anspruch 1, wobei das Färbemittel die Formel besitzt,

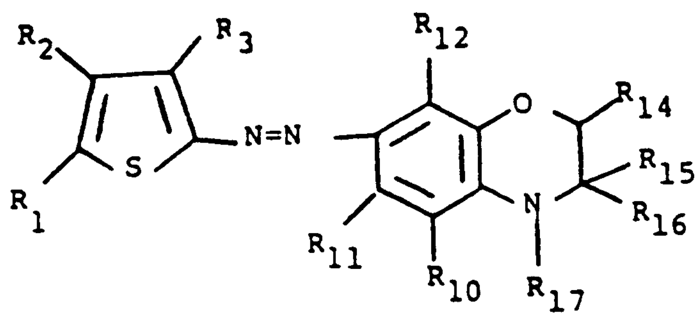

wobei $R_1$, $R_2$ und $R_3$ wie in Anspruch 1 definiert sind; und $R_{10}$, $R_{11}$, $R_{12}$, $R_{14}$, $R_{15}$, $R_{16}$ und $R_{17}$ wie in Anspruch 9 definiert sind.

**11.** Verfahren nach einem der Ansprüche 1 und 8 bis 10, wobei das Harz geschäumt wird.

**12.** Verfahren nach einem der Ansprüche 1 und 8 bis 11, wobei das Harz einen Flammenverzögerer enthält.

**13.** Verfahren nach einem der Ansprüche 1 und 8 bis 12, wobei jede Alkyl- oder Alkylengruppe bis zu 8 C-Atome und jede Arylgruppe bis zu 12 C-Atome aufweist.

**14.** Verfahren nach einem der Ansprüche 1 und 8 bis 13, wobei $R_1$ und/oder $R_3$ CN, CO, SO oder $SO_2$ enthält.

**15.** Verfahren nach einem der Ansprüche 1 und 8 bis 14, wobei keiner der Reste $R_1$, $R_2$ und $R_3$ Alkanoyl oder Aroyl bedeutet.

**16.** Verbindung nach einem der Ansprüche 2 bis 7, wobei jede Alkyl- oder Alkylengruppe bis zu 8 C-Atome und jede Arylgruppe bis zu 12 C-Atome aufweist.

**17.** Verbindung nach einem der Ansprüche 2 bis 7 und 16, wobei $R_1$ und/oder $R_3$ CN, CO, SO oder $SO_2$ enthalten.

**18.** Verbindung nach einem der Ansprüche 2 bis 7, 16 und 17, wobei keiner der Reste $R_1$, $R_2$ und $R_3$ Alkanoyl oder Aroyl bedeutet.

**Patentansprüche für folgenden Vertragsstaat : AT**

**1.** Verfahren zur Herstellung eines gefärbten Polyurethanharzes, umfassend die Durchführung einer Polyurethan-bildenden Polyadditionsreaktion bei einem Gemisch aus einem Isocyanat und einem Polyol und, vor oder während der Reaktion, Zugabe eines reaktionsfähigen Färbemittels zu dem Gemisch, das beständig ist gegenüber Zinn-II-octanoat und flammverzögernden Verbindungen und das die (folgende) allgemeine Formel besitzt,

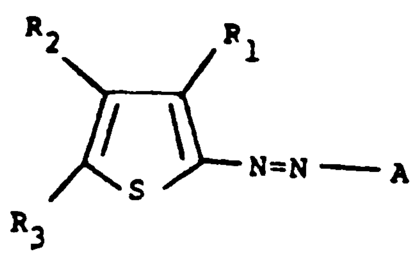

in der $R_1$, $R_2$ und $R_3$ jeweils unabhängig ausgewählt sind aus Halogen, Carboxyl, Alkanoyl, Aroyl, Alkyl, Aryl, Cyano, Alkylsulfonyl, Arylsulfonyl, Alkylthio, Arylthio, Alkylsulfinyl, Arylsulfinyl, Alkyldithio, Aryldithio, Thiocyano, Alkylaminocarbonyl, Dialkylaminocarbonyl, Alkoxy, Aryloxy, Wasserstoff, Alkylaminosulfonyl, Arylaminosulfonyl, Dialkylaminosulfonyl, Diarylaminosulfonyl, Alkylaminosulfinyl, Dialkylaminosulfinyl, Arylaminosulfinyl, Diarylaminosulfinyl, Alkylaminothio, Dialkylaminothio, Arylaminothio und Diarylaminothio oder einer der Reste $R_1$, $R_2$ und $R_3$, wie oben definiert ist, und die beiden anderen einen zweiwertigen Polymethylenrest bedeuten, und so einen carbocyclischen Ring mit den Kohlenstoffatomen, an die sie gebunden sind, bilden; und

A der Rest eines Farbstoffkupplers ist, der durch einen oder mehrere reaktionsfähige Substituenten funktionell ist.

**2.** Verfahren nach Anspruch 1, wobei das Färbemittel eine Verbindung ist der Formel

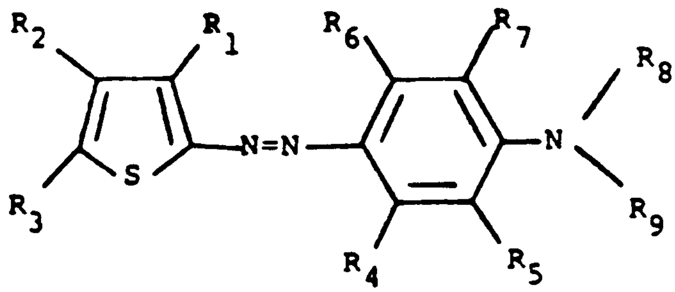

in der $R_1$, $R_2$ und $R_3$ wie in Anspruch 1 definiert sind, oder eine Alkoxycarbonylgruppe bedeuten;

$R_4$, $R_5$, $R_6$ und $R_7$ unabhängig voneinander ausgewählt sind aus Wasserstoff, Alkyl, Alkoxy, Aryloxy, Alkylaminosulfonyl, Dialkylaminosulfonyl, Arylaminosulfonyl, Diarylaminosulfonyl, Alkylaminocarbonyl, Dialkylaminocarbonyl, Arylaminocarbonyl, Diarylaminocarbonyl, Halogen, Alkylthio und Arylthio; und

$R_8$ und $R_9$ unabhängig voneinander ausgewählt sind aus Polyalkylenoxidresten, Resten von Copolymeren von Polyalkylenoxiden und Resten von Hydroxyalkylenen.

**3.** Verfahren nach Anspruch 2, wobei entweder $R_1$, $R_2$ und $R_3$ unabhängig voneinander ausgewählt sind aus Halogen, Carboxyl, Alkanoyl, Aroyl, Alkyl, Aryl, Cyano, Alkylthio, Alkyldithio, Arylthio, Aryldithio, Thiocyano, Alkylaminocarbonyl, Dialkylaminocarbonyl, Arylaminocarbonyl, Diarylaminocarbonyl, Alkoxy, Alkylaminothio, Dialkylaminothio und (wenn eine angrenzende Gruppe Isobutyryl ist) Wasserstoff oder einer der Reste $R_1$, $R_2$ und $R_3$, wie oben definiert ist, und die beiden anderen einen zweiwertigen Polymethylenrest bedeuten.

**4.** Verfahren nach Anspruch 2, wobei $R_1$, $R_2$ und $R_3$ unabhängig voneinander ausgewählt sind aus Cyano, nieder-Alkyl, eine carbocyclische Gruppe bildende Polymethylenkette, Alkoxycarbonyl, Alkanoyl, Arylcarbonylamin und Wasserstoff, wenn eine angrenzende Gruppe Isobutyryl ist.

**5.** Verfahren nach einem der Ansprüche 2 bis 4, wobei $R_4$, $R_5$, $R_6$ und $R_7$ unabhängig voneinander ausgewählt sind aus Wasserstoff, Halogen und Alkyl.

**6.** Verfahren nach Anspruch 2, wobei die Verbindung eine der folgenden 10 Formeln besitzt

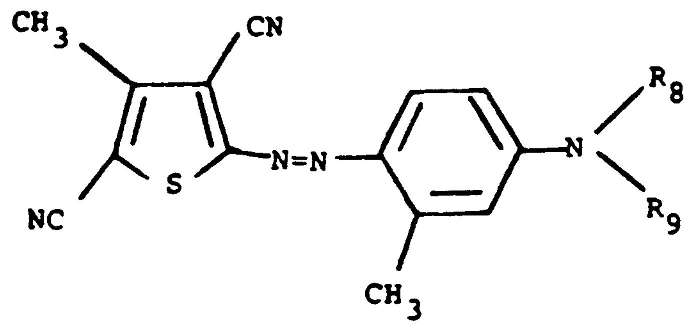

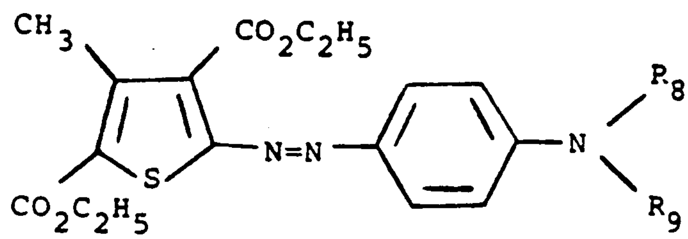

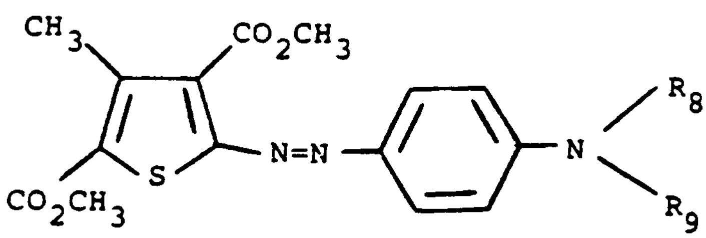

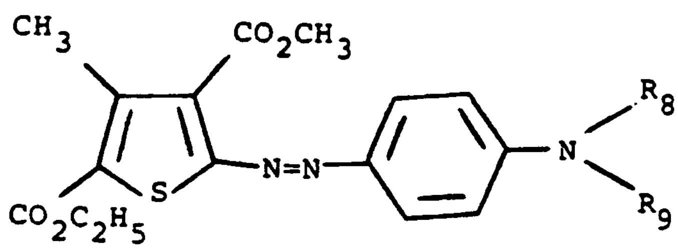

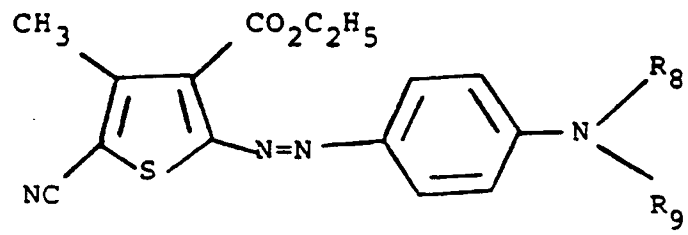

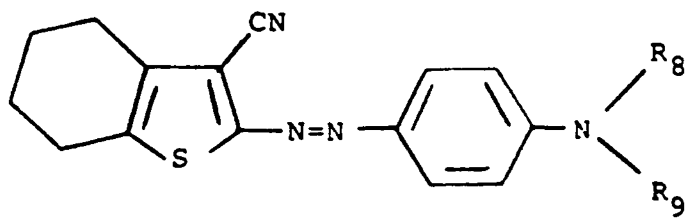

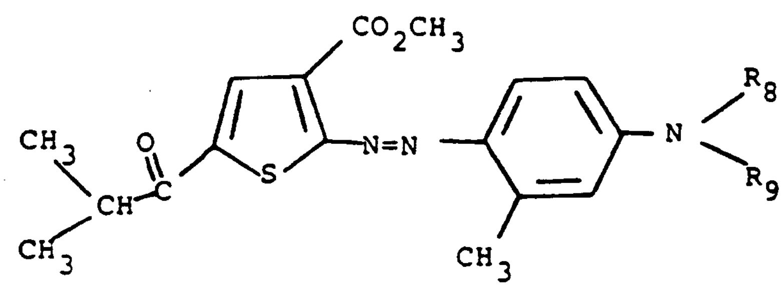

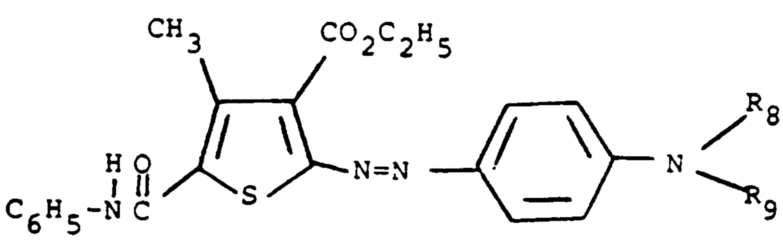

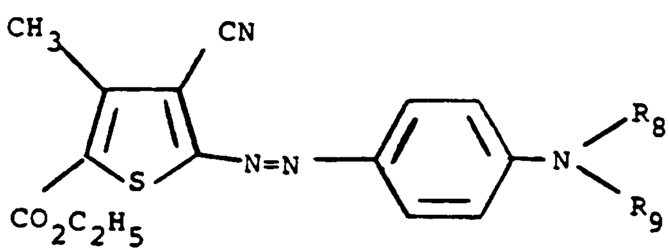

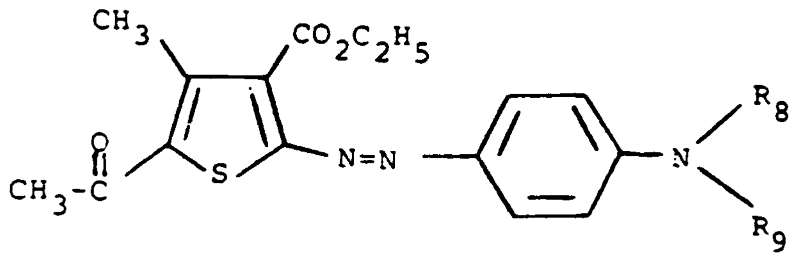

wobei $R_8$ und $R_9$ wie in Anspruch 2 definiert sind.

7. Verfahren nach einem der Ansprüche 2 bis 6, wobei $R_8$ und $R_9$ unabhängig voneinander ausgewählt sind aus Polylalkylenoxidresten und Resten von Copolymeren von Polyalkylenoxiden mit einem mittleren Molekulargewicht von 44 bis 2500.

8. Verfahren nach Anspruch 1, wobei das Färbemittel die Formel besitzt,

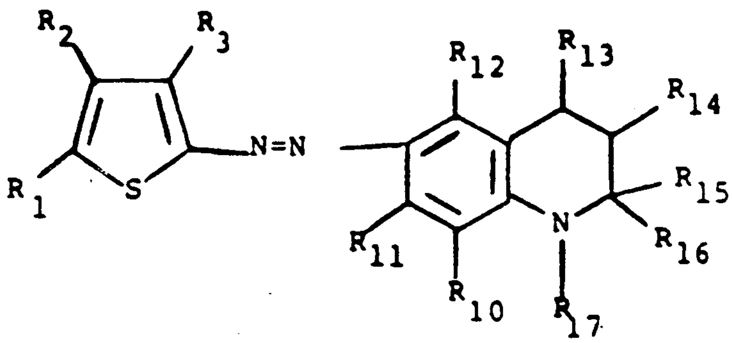

wobei $R_1$, R und $R_3$ wie in Anspruch 1 definiert sind;

$R_{10}$, $R_{12}$, $R_{13}$ und $R_{14}$ unabhängig voneinander ausgewählt sind aus Wasserstoff und nieder-Alkyl.

$R_{11}$ Wasserstoff, nieder-Alkyl, Alkylaminocarbonyl, Arylaminocarbonyl, Alkylaminosulfonyl oder Arylaminosulfonyl ist;

$R_{15}$ und $R_{16}$ gleiche oder verschiedene nieder-Alkylgruppen sind; und

$R_{17}$ ein Polyalkylenoxidrest, ein Rest eines Copolymers von Polyalkylenoxiden oder ein Hydroxyalkylenrest ist.

9. Verfahren nach Anspruch 1, wobei das Färbemittel die Formel besitzt,

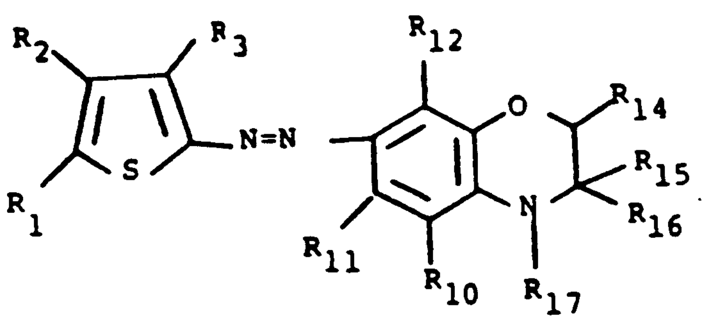

wobei $R_1$, $R_2$ und $R_3$ wie in Anspruch 1 definiert sind; und $R_{10}$, $R_{11}$, $R_{12}$, $R_{14}$, $P_{15}$, $R_{16}$ und $R_{17}$ wie in Anspruch 9 definiert sind.

10. Verfahren nach einem der vorangehenden Ansprüche, wobei das Harz geschäumt wird.

**11.** Verfahren nach einem der vorangehenden Ansprüche, wobei das Harz einen Flammenverzögerer enthält.

**12.** Verfahren nach einem der vorangehenden Ansprüche, wobei jede Alkyl- oder Alkylengruppe bis zu 8 C-Atome aufweist und jede Arylgruppe bin zu 12 C-Atome.

**13.** Verfahren nach einem der vorgangehenden Ansprüche, wobei $R_1$ und/oder $R_3$ CN, CO, SO oder $SO_2$ enthält.

**14.** Verfahren nach einem der vorangehenden Ansprüche, wobei keiner der Reste $R_1$, $R_2$ und $R_3$ Alkanoyl oder Aroyl bedeutet.

**Revendications**
**Revendications pour les Etats contractants suivants : BE, CH, DE, FR, GB, IT, LU, NL, SE**

**1.** Un procédé de préparation d'une résine de polyuréthanne colorée qui consiste à soumettre un mélange d'un isocyanate et d'un polyol à une réaction de polyaddition de formation du polyuréthanne et, avant ou durant la réaction, à ajouter au mélange un agent colorant réactif qui est effectivement résistant à l'octoate stanneux et aux composés retardateurs de flamme et qui est de formule :

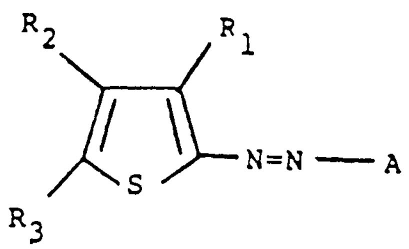

dans laquelle $R_1$, $R_2$ et $R_3$ sont chacun sélectionnés indépendamment parmi les suivants : halogène, carboxyle, alcanoyle, aroyle, alkyle, aryle, cyano, alkylsulfonyle, arylsulfonyle, alkylthio, arylthio, alkylsulfinyle, arylsulfinyle, alkyldithio, aryldithio, thiocyano, alkylaminocarbonyle, dialkylaminocarbonyle, alcoxy, aryloxy, hydrogène, alkylaminosulfonyle, arylaminosulfonyle, dialkylaminosulfonyle, diarylaminosulfonyle, alkylaminosulfinyle, dialkylaminosulfinyle, arylaminosulfinyle, diarylaminosulfinyle, alkylaminothio, dialkylaminothio, arylaminothio et diarylaminothio, ou bien l'un des $R_1$, $R_2$ et $R_3$ est comme défini précédemment et les deux autres sont un radical polyméthylène divalent, formant ainsi un noyau carbocyclique avec les atomes de carbone auxquels ils sont attachés ; et

A est le radical d'un coupleur de colorant qui a une fonctionnalité grâce à un ou plusieurs substituants réactifs.

**2.** Un composé de formule :

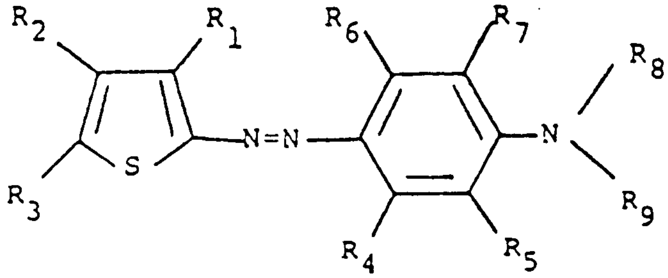

dans laquelle $R_1$,$R_2$ et $R_3$ sont comme défini dans la revendication 1 ou un groupe alcoxycarbonyle ;

$R_4$, $R_5$, $R_6$ et $R_7$ sont indépendamment sélectionnés parmi les suivants : hydrogène, alkyle, alcoxy, aryloxy, alkylaminosulfonyle, dialkylaminosulfonyle, arylaminosulfonyle, diarylaminosulfonyle, alkylaminocarbonyle, dialkylaminocarbonyle, arylaminocarbonyle, diarylaminocarbonyle, halogène, alkylthio et arylthio ; et

$R_8$ et $R_9$ sont sélectionnés indépendamment parmi les radicaux oxydes de polyalkylène, les radicaux de copolymères des oxydes de polyalkylène et les radicaux d'hydroxyalkylènes.

**3.** Un composé selon la revendication 2, selon lequel $R_1$, $R_2$ et $R_3$ sont chacun sélectionnés indépendamment parmi les suivants : halogène, carboxyle, alcanoyle, aroyle, alkyle, aryle, cyano, alkylthio, alkyldithio, arylthio, aryldithio, thiocyano, alkylaminocarbonyle, dialkylaminocarbonyle, arylaminocarbonyle, diarylaminocarbonyle, alcoxy, alkylaminothio, dialkylaminothio et (lorsqu'un groupe adjacent est le groupe isobutyryle) hydrogène, ou bien l'un des $R_1$, $R_2$ et $R_3$ est comme défini précédemment et les deux autres représentent un radical polyméthylène divalent.

**4.** Un composé selon la revendication 2, selon lequel $R_1$, $R_2$ et $R_3$ sont choisis indépendamment parmi les suivants : cyano, alkyle inférieur, une chaîne polyméthylène formant un noyau carbocyclique, alcoxycarbonyle, alcanoyle, arylcarbonylamino et hydrogène lorsqu'un groupe adjacent est le groupe isobutyryle.

**5.** Un composé selon l'une quelconque des revendications 2 à 4, selon lequel $R_4$, $R_5$, $R_6$ et $R_7$ sont sélectionnés indépendamment parmi les suivants : hydrogène, halogène et alkyle.

**6.** Un composé selon l'une quelconque des dix formules suivantes :

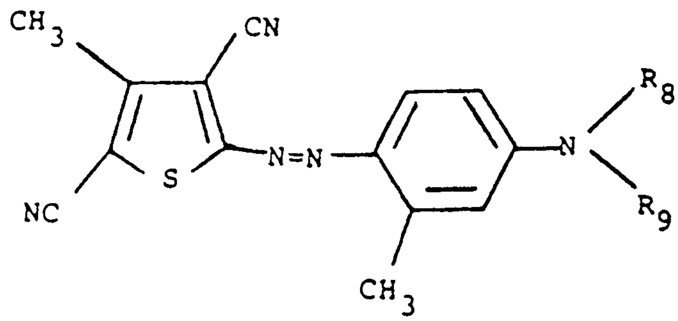

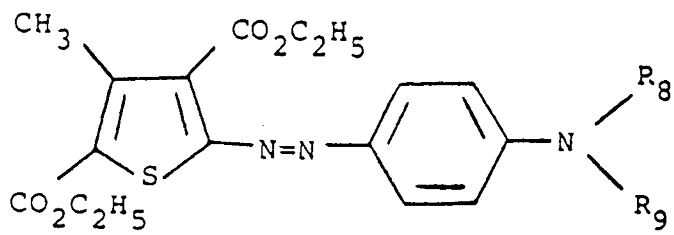

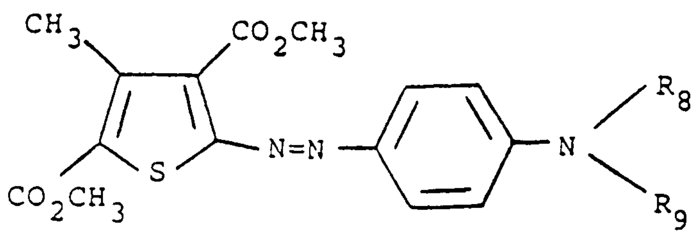

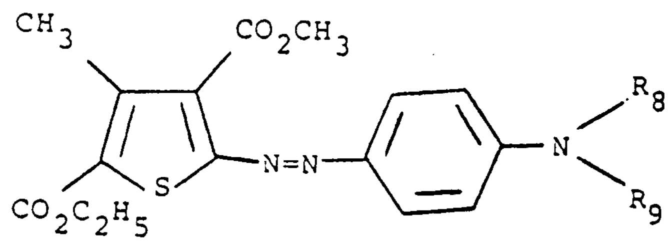

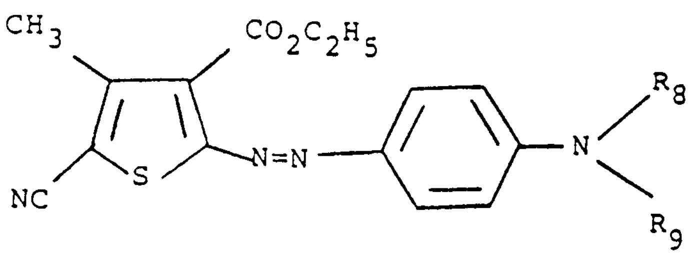

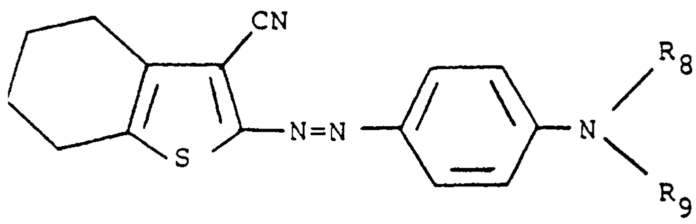

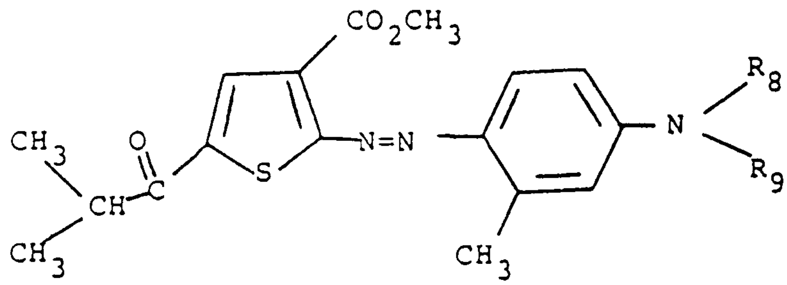

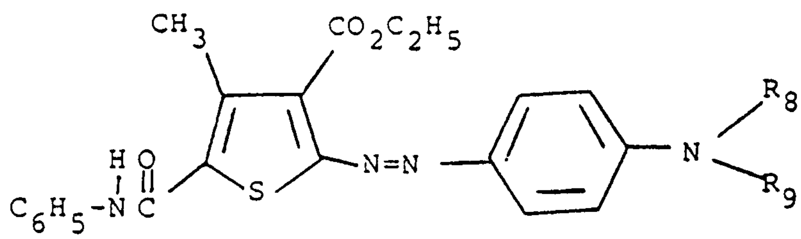

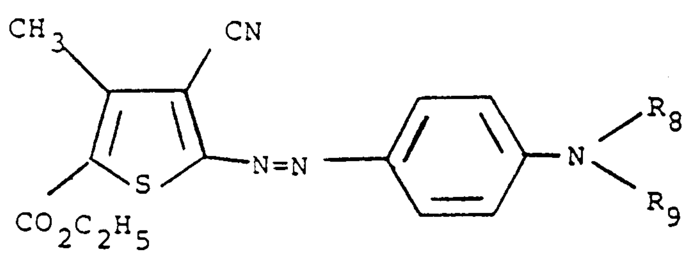

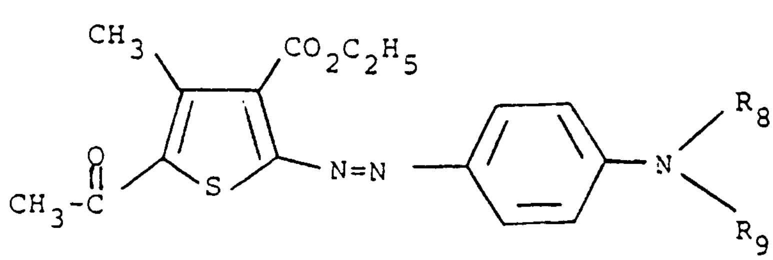

dans lesquelles $R_8$ et $R_9$ sont comme défini dans la revendication 2.

**7.** Un composé selon l'une quelconque des revendications 2 à 6, selon lequel $R_8$ et $R_9$ sont sélectionnés indépendamment parmi les radicaux oxydes de polyalkylène et les radicaux de copolymères d'oxydes de polyalkylène ayant un poids moléculaire moyen de 44 à 2 500.

**8.** Un procédé selon la revendication 1, selon lequel l'agent colorant est un composé selon l'une

quelconque des revendications 2 à 7.

**9.** Un procédé selon la revendication 1, selon lequel l'agent colorant a la formule :

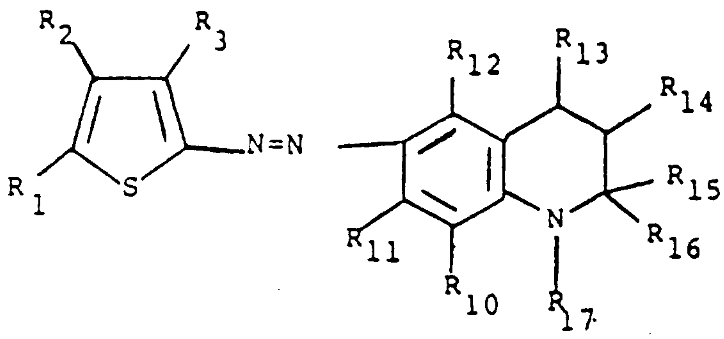

dans laquelle $R_1$, $R_2$ et $R_3$ sont comme défini dans la revendication 1 ;

$R_{10}$, $R_{12}$, $R_{13}$ et $R_{14}$ sont sélectionnés indépendamment parmi les suivants : hydrogène et alkyle inférieur ;

$R_{11}$ est l'un des suivants : hydrogène, alkyle inférieur, alkylaminocarbonyle, arylaminobarbonyle, alkylaminosulfonyle ou arylaminosulfonyle ;

$R_{15}$ et $R_{16}$ sont identiques ou différents et désignent un alkyle inférieur ; et

$R_{17}$ est un radical oxyde de polyalkylène, un radical d'un copolymère d'oxydes de polyalkylène, ou un radical hydroxyalkylène.

**10.** Un procédé selon la revendication 1, selon lequel l'agent colorant a la formule :

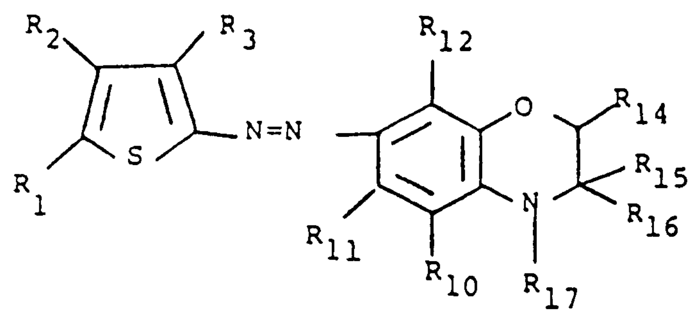

dans laquelle $R_1$, $R_2$ et $R_3$ sont comme défini dans la revendication 1 ; et

$R_{10}$, $R_{11}$, $R_{12}$, $R_{14}$, $R_{15}$, $R_{16}$ et $R_{17}$ sont comme défini dans la revendication 9.

**11.** Un procédé selon l'une quelconque des revendications 1 et 8 à 10,selon lequel la résine est transformée en mousse.

**12.** Un procédé selon l'une quelconque des revendications 1 et 8 à 11, selon lequel la résine inclut un agent retardateur de flamme.

**13.** Un procédé selon l'une quelconque des revendications 1 et 8 à 12, selon lequel tout groupe alkyle ou alkylène a jusqu'à 8 atomes de carbone et tout groupe aryle a jusqu'à 12 atomes de carbone.

**14.** Un procédé selon l'une quelconque des revendications 1 et 8 à 13, selon lequel $R_1$ et/ou $R_3$ est CN, CO, SO, ou contenant du $SO_2$.

**15.** Un procédé selon l'une quelconque des revendications 1 et 8 à 14, selon lequel aucun des $R_1$, $R_2$ et $R_3$ n'est un radical alcanoyle ou aroyle.

16. Un composé selon l'une quelconque des revendications 2 à 7, selon lequel tout groupe alkyle ou alkylène a jusqu'à 8 atomes de carbone et tout groupe aryle a jusqu'à 12 atomes de carbone.

17. Un composé selon l'une quelconque des revendications 2 à 7 et 16, selon lequel $R_1$ et/ou $R_3$ est CN, CO, SO ou contenant du $SO_2$.

18. Un composé selon l'une quelconque des revendications 2 à 7, 16 et 17, selon lequel aucun des $R_1$, $R_2$ et $R_3$ n'est un groupe alcanoyle ou aroyle.

**Revendications pour l'Etat contractant suivant : AT**

1. Un procédé de préparation d'une résine de polyuréthanne colorée qui consiste à soumettre un mélange d'un isocyanate et d'un polyol à une réaction de polyaddition de formation du polyuréthanne et, avant ou durant la réaction, à ajouter au mélange un agent colorant réactif qui est effectivement résistant à l'octoate stanneux et aux composés retardateurs de flamme et qui est de formule :

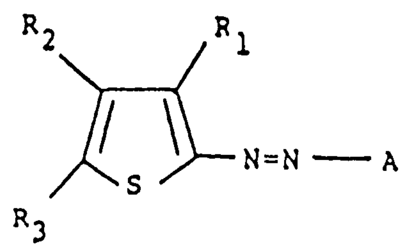

dans laquelle $R_1$, $R_2$ et $R_3$ sont chacun sélectionnés indépendamment parmi les suivants : halogène, carboxyle, alcanoyle, aroyle, alkyle, aryle, cyano, alkylsulfonyle, arylsulfonyle, alkylthio, arylthio, alkylsulfinyle, arylsulfinyle, alkyldithio, aryldithio, thiocyano, alkylaminocarbonyle, dialkylaminocarbonyle, alcoxy, aryloxy, hydrogène, alkylaminosulfonyle, arylaminosulfonyle, dialkylaminosulfonyle, diarylaminosulfonyle, alkylaminosulfinyle, dialkylaminosulfinyle, arylaminosulfinyle, diarylaminosulfinyle, alkylaminothio, dialkylaminothio, arylaminothio et diarylaminothio, ou bien l'un des $R_1$, $R_2$ et $R_3$ est comme défini précédemment et les deux autres sont un radical polyméthylène divalent, formant ainsi un noyau carbocyclique avec les atomes de carbone auxquels ils sont attachés ; et

A est le radical d'un coupleur de colorant qui a une fonctionnalité grâce à un ou plusieurs substituants réactifs.

2. Un procédé selon la revendication 1, selon lequel l'agent colorant est un composé de formule :

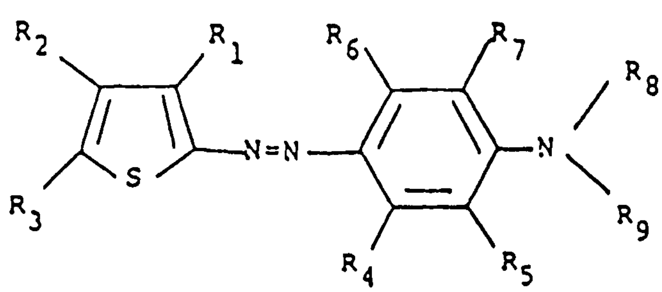

dans laquelle $R_1$,$R_2$ et $R_3$ sont comme défini dans la revendication 1 ou un groupe alcoxycarbonyle ;

$R_4$, $R_5$, $R_6$ et $R_7$ sont indépendamment sélectionnés parmi les suivants : hydrogène, alkyle, alcoxy, aryloxy, alkylaminosulfonyle, dialkylaminosulfonyle, arylaminosulfonyle, diarylaminosulfonyle, alkylaminocarbonyle, dialkylaminocarbonyle, arylaminocarbonyle, diarylaminocarbonyle, halogène, alkylthio et arylthio ; et

$R_8$ et $R_9$ sont sélectionnés indépendamment parmi les radicaux oxydes de polyalkylène, les radicaux de copolymères des oxydes de polyalkylène et les radicaux d'hydroxyalkylènes.

**3.** Un procédé selon la revendication 2, selon lequel $R_1$, $R_2$ et $R_3$ sont chacun sélectionnés indépendamment parmi les suivants : halogène, carboxyle, alcanoyle, aroyle, alkyle, aryle, cyano, alkylthio, alkyldithio, arylthio, aryldithio, thiocyano, alkylaminocarbonyle, dialkylaminocarbonyle, arylaminocarbonyle, diarylaminocarbonyle, alcoxy, alkylaminothio, dialkylaminothio et (lorsqu'un groupe adjacent est le groupe isobutyryle) hydrogène, ou bien l'un des $R_1$, $R_2$ et $R_3$ est comme défini précédemment et les deux autres représentent un radical polyméthylène divalent.

**4.** Un procédé selon la revendication 2, selon lequel $R_1$, $R_2$ et $R_3$ sont choisis indépendamment parmi les suivants : cyano, alkyle inférieur, une chaîne polyméthylène formant un noyau carbocyclique, alcoxycarbonyle, alcanoyle, arylcarbonylamino et hydrogène lorsqu'un groupe adjacent est le groupe isobutyryle.

**5.** Un procédé selon l'une quelconque des revendications 2 à 4, selon lequel $R_4$, $R_5$, $R_6$ et $R_7$ sont sélectionnés indépendamment parmi les suivants : hydrogène, halogène et alkyle.

**6.** Un procédé selon la revendication 2, selon lequel le composé a l'une quelconque des dix formules suivantes :

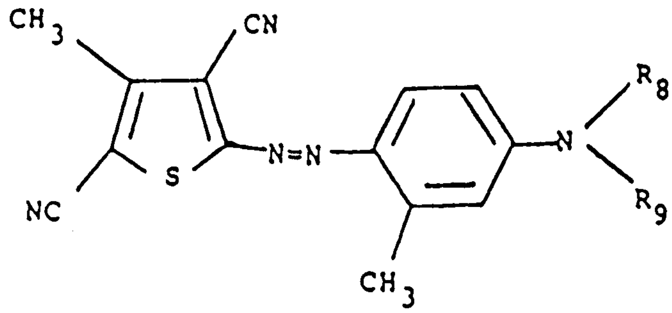

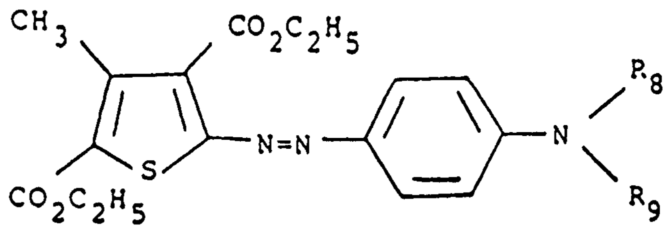

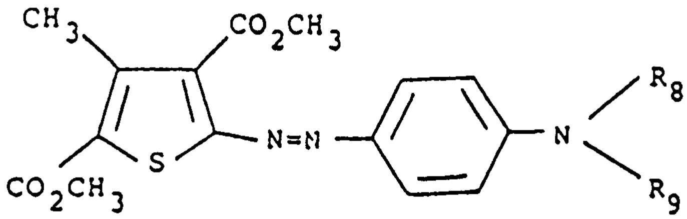

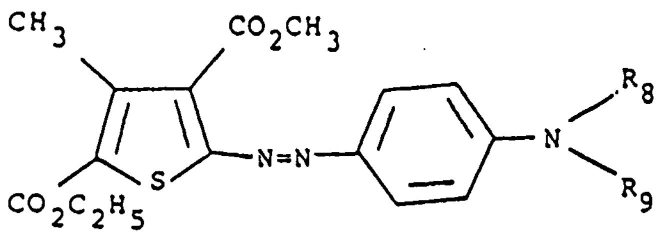

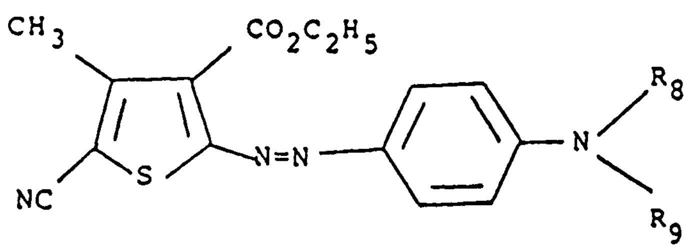

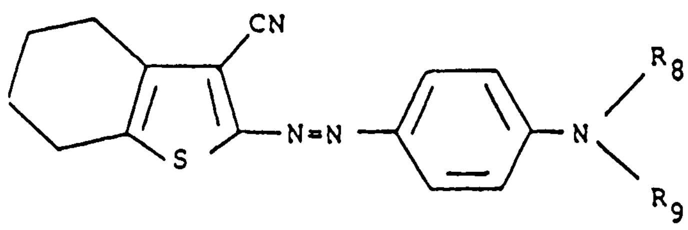

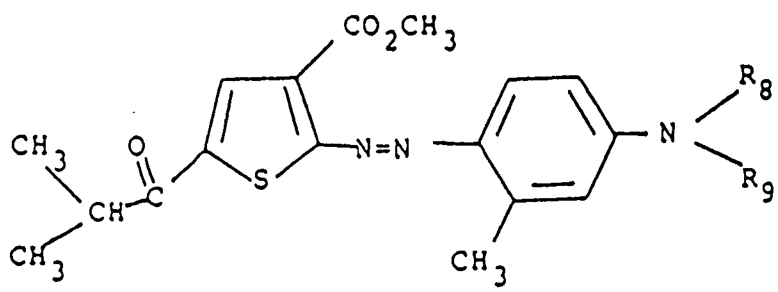

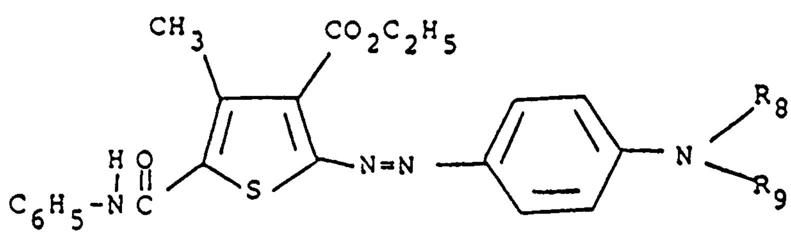

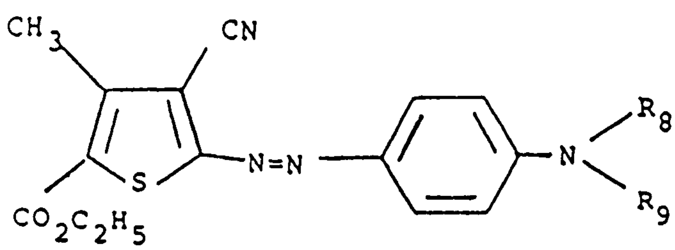

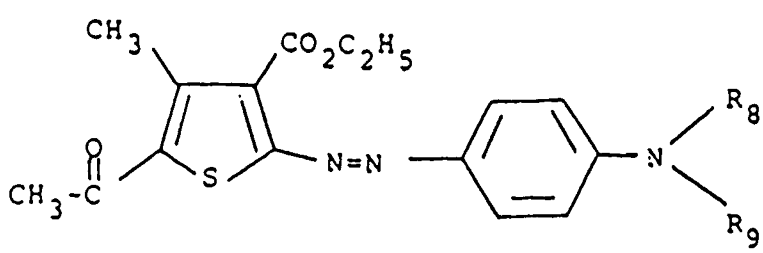

dans lesquelles $R_8$ et $R_9$ sont comme défini dans la revendication 2.

**7.** Un procédé selon l'une quelconque des revendications 2 à 6, selon lequel $R_8$ et $R_9$ sont sélectionnés indépendamment parmi les radicaux oxydes de polyalkylène et les radicaux de copolymères d'oxydes de polyalkylène ayant un poids moléculaire moyen de 44 à 2 500.

**8.** Un procédé selon la revendication 1, selon lequel l'agent colorant a la formule :

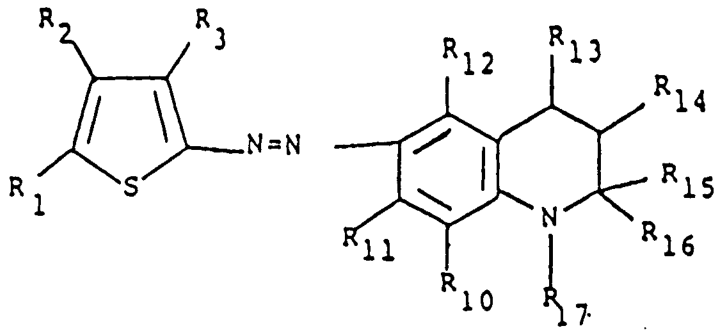

dans laquelle $R_1$, $R_2$ et $R_3$ sont comme défini dans la revendication 1 ;

$R_{10}$, $R_{12}$, $R_{13}$ et $R_{14}$ sont sélectionnés indépendamment parmi les suivants : hydrogène et alkyle inférieur;

$R_{11}$ est l'un des suivants : hydrogène, alkyle inférieur, alkylaminocarbonyle, arylaminobarbonyle, alkylaminosulfonyle ou arylaminosulfonyle ;

$R_{15}$ et $R_{16}$ sont identiques ou différents et désignent un alkyle inférieur ; et

$R_{17}$ est un radical oxyde de polyalkylène, un radical d'un copolymère d'oxydes de polyalkylène, ou un radical hydroxyalkylène.

**9.** Un procédé selon la revendication 1, selon lequel l'agent colorant a la formule :

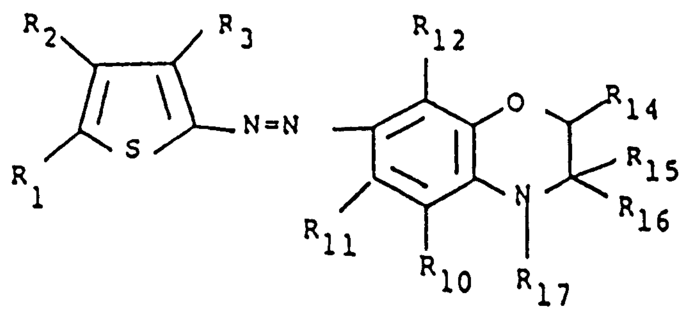

dans laquelle $R_1$, $R_2$ et $R_3$ sont comme défini dans la revendication 1 ; et

$R_{10}$, $R_{11}$, $R_{12}$, $R_{14}$, $R_{15}$, $R_{16}$ et $R_{17}$ sont comme défini dans la revendication 9.

**10.** Un procédé selon l'une quelconque des revendications précédentes, selon lequel la résine est transformée en mousse.

**11.** Un procédé selon l'une quelconque des revendications précédentes, selon lequel la résine inclut un agent retardateur de flamme.

**12.** Un procédé selon l'une quelconque des revendications précédentes, selon lequel tout groupe alkyle ou alkylène a jusqu'à 8 atomes de carbone et tout groupe aryle a jusqu'à 12 atomes de carbone.

**13.** Un procédé selon l'une quelconque des revendications précédentes, selon lequel $R_1$ et/ou $R_3$ est CN, CO, SO, ou contenant du $SO_2$.

**14.** Un procédé selon l'une quelconque des revendications précédentes, selon lequel aucun des $R_1$, $R_2$ et $R_3$ n'est un radical alcanoyle ou aroyle.